# EUROPEAN PATENT SPECIFICATION

(11) **EP 2 871 074 B1**
(45) Date of publication and mention of the grant of the patent: **10.05.2017**
(21) Application number: 13813824.3
(22) Date of filing: 04.07.2013
(51) Int. Cl.: B60C 11/04, B60C 9/18, B60C 11/00, B60C 11/13, B60C 11/03, B60C 9/28

(54) **TIRE**
REIFEN
PNEUMATIQUE

(30) Priority: 04.07.2012 JP 2012150815
(43) Date of publication of application: 13.05.2015
(73) Proprietor: Bridgestone Corporation, Tokyo 104-8340 (JP)
(72) Inventor: OGANE, Shun, Tokyo 187-8531 (JP)
(74) Representative: Oxley, Robin John George
(86) International application number: PCT/JP2013/068341
(87) International publication number: WO 2014/007315

(56) References cited:
- WO-A1-2008/114668
- WO-A1-2008/114668
- JP-A- H06 127 213
- JP-A- H06 127 213
- JP-A- H10 250 314
- JP-A- H10 250 314
- JP-A- 2005 028 999
- JP-A- 2005 028 999
- JP-A- 2005 170 381
- JP-A- 2005 170 381
- JP-A- 2012 006 538
- JP-A- 2012 006 538

## Description

### [Technical Field]

The present invention relates to a tire that suppresses a temperature increase of a tire due to running.

### [Background Art]

Conventionally, in a pneumatic tire (hereinafter, a tire) mounted on a vehicle, various methods have been used to suppress a temperature increase of a tire due to vehicle running. Particularly, a temperature increase is remarkable in a heavy-duty tire for a truck, bus, construction vehicle and the like.

Thus, for example, a tire having a number of fin-shaped protrusions in a sidewall portion (see PTL 1, for example) has been known. In such a tire, when a tire rolls on a road surface, a fin-shaped protrusions causes turbulence in an airflow passing through a sidewall surface, the turbulence accelerates heat radiation from a tire, and a temperature increase of a sidewall portion is suppressed.

However, the conventional tire described above has a point to be improved. That is, there are limitations to effective suppression of a temperature increase in a tread portion only by a protrusion in a side wall portion.

When a temperature of a tread portion 5 increases, a rubber member constituting the tread portion 5 is deteriorated by heat. Due to the deterioration of the rubber member, a belt layer disposed in the tread portion is likely to be peeled from the rubber member, and therefore, there is a problem that the durability of a tire is lowered.

Attention is drawn to the disclosures of WO2008/114668, JPH10-250314, JP2005-170381, JP2005-028999, JPH06-127213 and JP2012-006538.

### [Citation List]

### [Patent Literature]

[Patent Literature 1] : JP 2009-160994 A (pages 4 to 5, and Fig. 2)

### [Summary of Invention]

The present invention provides a tire as claimed in claim 1.

### [Brief Description of Drawings]

Fig. 1 is a development view of a tread pattern of a tire 1 according to a present embodiment.
Fig. 2 is a cross-sectional view along a tire radial direction trd and a tread width direction twd of the tire 1 according to the present embodiment.
Fig. 3 is an enlarged perspective view showing an enlarged land block 100.
Fig. 4 is a plan view of a circumferential land portion 70A in a tread surface view.
Figs. 5(a) to 5(c) are enlarged plan views of a recessed portion 300 in the tread surface view.
Fig. 6 is a partially broken perspective view of a circumferential groove 50B.
Fig. 7 is a view showing a shape of the circumferential groove 50B in a tread plan view (a viewpoint above a tread portion 5).
Fig. 8 is a view showing a shape of the circumferential groove 50B from a direction of F5 in Fig. 7.
Fig. 9 is a cross-sectional view of the circumferential groove 50B (protrusion portion 500) along a line F6-F6 of Fig. 7.
Fig. 10 (a) is a view showing a shape of the circumferential groove 50B in the tread plan view, and Fig. 10(b) is a view showing a shape of the circumferential groove 50B from the F5 direction of Fig. 7.
Fig. 11 is a graph showing a relationship between an angle θf and a heat transfer rate (index) in a circumferential groove.
Fig. 12 is a graph showing a relationship between a coefficient applied to a length L of the protrusion portion and the heat transfer rate in the circumferential groove.
Fig. 13 is a graph showing a relationship between a coefficient applied to a groove depth D and the heat transfer rate in the circumferential groove.
Fig. 14 is a graph showing a relationship between a durability of the tire and a length DL along the tread width direction twd.
Fig. 15 is a plan view of a circumferential land portion 70A in the tread plan view according to another embodiment.
Fig. 16 is a plan view of the circumferential land portion 70A in the tread plan view according to the other embodiment.
Fig. 17 is an enlarged perspective view of an enlarged tread portion 5 according to still another embodiment.
Fig. 18 is a plan view of a circumferential land portion 70A in the tread surface view according to the other embodiment.
Fig. 19 is an enlarged perspective view of an enlarged tread portion 5 according to yet another embodiment.
Fig. 20 is a plan view of a circumferential land portion 70A in the tread surface view according to the other embodiment.
Figs. 21(a) to 21(g) are views showing variations of a cross-sectional shape of a protrusion portion 500.

### [Description of Embodiments]

An example of a tire according to the present invention will be described with reference to the drawings. More specifically, (1) a schematic configuration of a tire 1, (2) a schematic configuration of an air supply mechanism, (3) a schematic configuration of a recessed portion 300, (4) a schematic configuration of a protrusion portion 500, (5) operations and effects, (6) comparative evaluation, and (7) other embodiments will be described.

In the following description of the drawings, the same or similar constituent elements are designated by the same or similar reference numerals. It is to be noted that the drawings are schematic and the dimensions or ratios are different from actual values. Accordingly, specific dimensions and the like should be determined by taking the following description into consideration. Needless to say, a relationship or a ratio of mutual dimensions may differ among the drawings.

### (1) Schematic Configuration of Tire 1

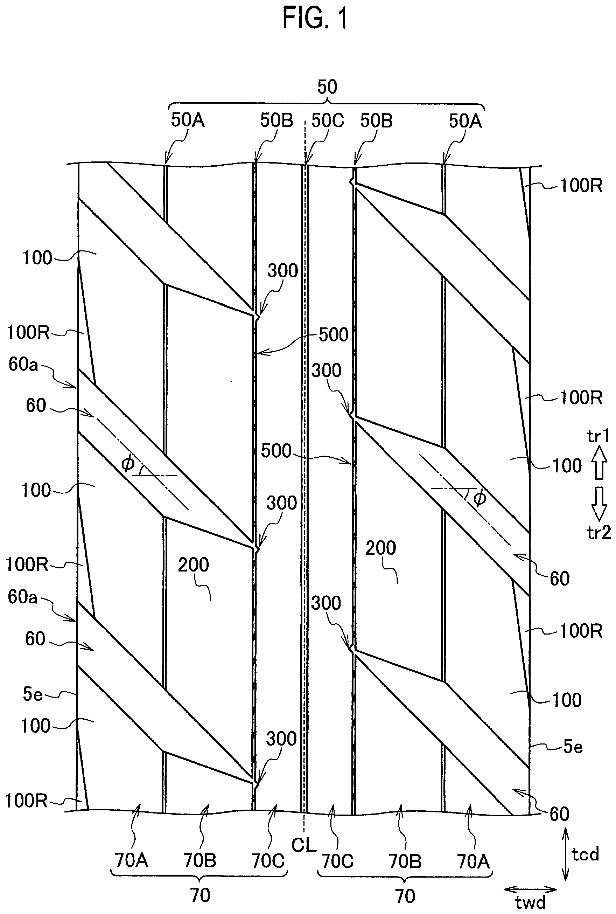

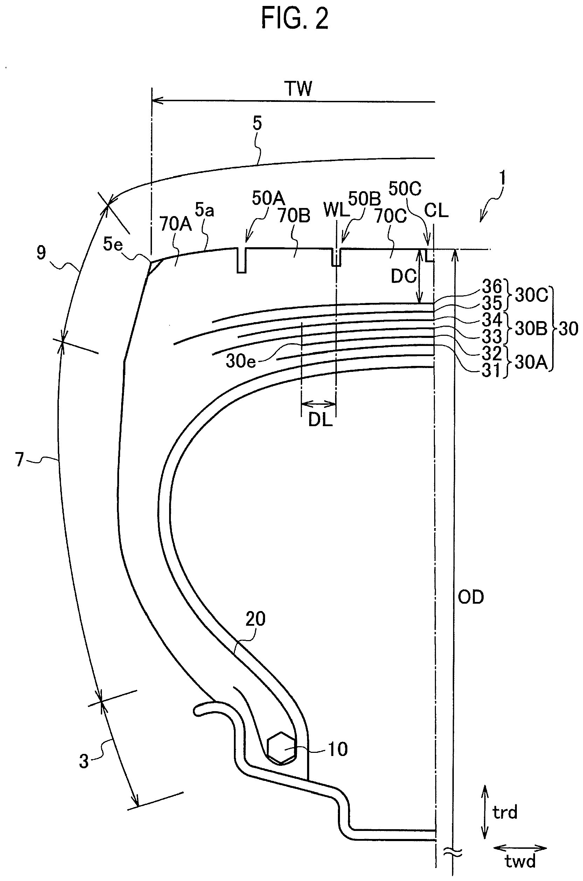

A schematic configuration of a tire 1 according to the present embodiment will be described with reference to Figs. 1 and 2. Fig. 1 is a development view of a tread pattern of the tire 1 according to the present embodiment. Fig. 2 is a cross-sectional view along a tire radial direction trd and a tread width direction twd of the tire 1 according to the present embodiment.

The tire 1 is assembled on a rim which is a normal rim. The tire 1 has a normal inner pressure, and a normal load is applied to the tire 1. The rim is provided with a rim flange. The rim flange supports a bead portion 3 in the tread width direction twd.

In the present embodiment, for the convenience of description, the tire 1 is mounted on a vehicle so as to rotate in a rotational direction tr1 when the vehicle moves forward. The rotational direction when the tire 1 is mounted on the vehicle is not specified.

The "normal rim" means a standard rim having an approved size defined in 2008 JATMA (Japan Automobile Tyre Manufactures Association) Year Book. In other countries than Japan, the "normal rim" means a standard rim having an approved size described in the below-mentioned standard.

The "normal inner pressure" means an air pressure specified in a tire inner pressure measuring method in 2008 JATMA Year Book (pp. 0-3 and p. 5). In other countries than Japan, the "normal inner pressure" means an air pressure corresponding to the air pressure in the measurement of a tire dimension, described in the below-mentioned standard.

The "normal load" means a load corresponding to a maximum load capacity in the application of a single wheel in 2008 JATMA Year Book. In other countries than Japan, the "normal load" means a maximum load (maximum load capacity) in an approved size described in the below-mentioned standard.

The standards are determined by industrial standards valid in districts where a tire is manufactured or used. For instance, it is "Year Book of the Tire and Rim Association Inc." in U. S. A., and "Standards Manual of the European Tire and Rim Technical Organization" in Europe.

As shown in Figs. 1 and 2, the tire 1 is provided with a bead portion 3, a tread portion 5, a side wall portion 7, and a buttress portion 9.

The bead portion 3 has a bead core 10. The bead portion 3 is in contact with a rim.

The tread portion 5 has a tread surface 5a which is in contact with a road surface. The tread portion 5 has a tread end portion 5e which is an outer end of the tread portion 5 in the tread width direction twd. The tread portion 5 has a tread pattern which is point symmetrical with respect to a point on a tire equator line CL as the center.

The side wall portion 7 configures a side surface of the tire 1. The side wall portion 7 is located between the bead portion 3 and the buttress portion 9. The side wall portion 7 connects the bead portion 3 and the tread portion 5 via the buttress portion 9.

The buttress portion 9 extends inward in the tire radial direction trd from the tread end portion 5e which is an outer end of the tread portion 5 in the tread width direction twd. The buttress portion 9 is continued to the side wall portion 7. The buttress portion 9 is located between the tread portion 5 and the side wall portion 7.

An inward position in the tire radial direction trd of the buttress portion 9 is equivalent to the innermost position in the tire radial direction trd of an opening position in the tread end portion 5e of a below-mentioned lateral groove portion (lug groove 60). The buttress portion 9 is a portion not in contact with the ground during normal running.

As shown in Fig. 2, the tire 1 is a pneumatic tire. In the tire 1, the tread portion 5 has a large rubber gauge (rubber thickness) as compared with pneumatic tires mounted on cars and the like.

More specifically, the tire 1 satisfies DC/OD ≥ 0.015 when a tire outer diameter is OD, and the rubber gauge of the tread portion 5 at the position of the tire equator line CL is DC.

The tire outer diameter OD (unit: mm) is a diameter of the tire 1 at a portion (generally, the tread portion 5 near the tire equator line CL) where the outer diameter of the tire 1 is maximum. The rubber gauge DC (unit: mm) is the rubber thickness of the tread portion 5 at the position of the tire equator line CL. The rubber gauge DC does not include a thickness of a belt layer 30. As shown in Fig. 2, when a circumferential groove 50C is formed at a position including the tire equator line CL, the rubber gauge DC is the rubber thickness of the tread portion 5 at a position adjacent to the circumferential groove 50C.

As shown in Fig. 2, the tire 1 is provided with a pair of bead cores 10, a carcass layer 20, and a plurality of belt layers 30.

The bead core 10 is provided in the bead portion 3. The bead core 10 is configured of a bead wire (not shown).

The carcass layer 20 configures a framework of the tire 1. The carcass layer 20 is formed throughout from the tread portion 5 to the bead portion 3 through the buttress portion 9 and the side wall portion 7.

The carcass layer 20 extends across the pair of the bead cores 10 and has a toroidal shape. The carcass layer 20 surrounds the bead core 10 in the present embodiment. The carcass layer 20 is in contact with the bead core 10. Both ends of the carcass layer 20 in the tread width direction twd are supported by a pair of the bead portions 3.

The carcass layer 20 has a carcass cord extending in a predetermined direction in a tread surface view. In the present embodiment, the carcass cord extends along the tread width direction twd. A steel wire is used as the carcass cord, for example.

The belt layer 30 is disposed in the tread portion 5. The belt layer 30 is located outside the carcass layer 20 in the tire radial direction trd. The belt layer 30 extends in a tire circumferential direction. The belt layer 30 has a belt cord extending while being inclined with respect to a predetermined direction as a direction in which the carcass cord extends. A steel cord is used as the belt cord, for example.

The plurality of the belt layers 30 include a first belt layer 31, a second belt layer 32, a third belt layer 33, a fourth belt layer 34, a fifth belt layer 35, and a sixth belt layer 36.

The first belt layer 31 is located outside the carcass layer 20 in the tire radial direction trd. The first belt layer 31 is located at the innermost position in the tire radial direction trd among the plurality of belt layers 30. The second belt layer 32 is located outside the first belt layer 31 in the tire radial direction trd. The third belt layer 33 is located outside the second belt layer 32 in the tire radial direction trd. The fourth belt layer 34 is located outside the third belt layer 33 in the tire radial direction trd. The fifth belt layer 35 is located outside the fourth belt layer 34 in the tire radial direction trd. The sixth belt layer 36 is located outside the fifth belt layer 35 in the tire radial direction trd. The sixth belt layer 36 is located at the outermost position in the tire radial direction trd among the plurality of belt layers 30. The first belt layer 31, the second belt layer 32, the third belt layer 33, the fourth belt layer 34, the fifth belt layer 35, and the sixth belt layer 36 are arranged in this order from inside to outside in the tire radial direction trd.

In the present embodiment, in the tread width direction twd, each width of the first belt layer 31 and the second belt layer 32 is not less than 25% and not more than 70% of a width TW of the tread surface 5a. In the tread width direction twd, each width of the third belt layer 33 and the fourth belt layer 34 is not less than 55% and not more than 90% of the width TW of the tread surface 5a. In the tread width direction twd, each width of the fifth belt layer 35 and the sixth belt layer 36 is not less than 60% and not more than 110% of the width TW of the tread surface 5a.

In the present embodiment, in the tread width direction twd, the width of the fifth belt layer 35 is wider than the width of the third belt layer 33, the width of the third belt layer 33 is not less than the width of the sixth belt layer 36, the width of the sixth belt layer 36 is wider than the width of the fourth belt layer 34, the width of the fourth belt layer 34 is wider than the width of the first belt layer 31, and the width of the first belt layer 31 is wider than the width of the second belt layer 32. In the tread width direction twd, among the plurality of belt layers 30, the width of the fifth belt layer 35 is largest, and the width of the second belt layer 32 is smallest. Accordingly, the plurality of belt layers 30 include a shortest belt layer (that is, the second belt layer 32) having the shortest length in the tread width direction twd.

The second belt layer 32 which is the shortest belt layer has a belt end 30e which is an end in the tread width direction twd.

In the present embodiment, in the tread surface view, each inclination angle of belt cords of the first belt layer 31 and the second belt layer 32 with respect to the carcass cord is not less than 70 degrees and not more than 85 degrees. Each inclination angle of belt cords of the third belt layer 33 and the fourth belt layer 34 with respect to the carcass cord is not less than 50 degrees and not more than 75 degrees. Each inclination angle of the fifth belt layer 35 and the sixth belt layer 36 with respect to the carcass cord is not less than 50 degrees and not more than 70 degrees.

The plurality of belt layers 30 includes an inner crossing belt group 30A, an intermediate crossing belt group 30B, and an outer crossing belt group 30C.

The inner crossing belt group 30A is configured of a set of the belt layers 30 and located outside the carcass layer 20 in the tire radial direction trd. The inner crossing belt group 30A is configured of the first belt layer 31 and the second belt layer 32. The intermediate crossing belt group 30B is configured of another set of the belt layers 30 and located outside the inner crossing belt group 30A in the tire radial direction trd. The intermediate crossing belt group 30B is configured of the third belt layer 33 and the fourth belt layer 34. The outer crossing belt group 30C is configured of still another set of the belt layers 30 and located outside the intermediate crossing belt group 30B in the tire radial direction trd. The outer crossing belt group 30C is configured of the fifth belt layer 35 and the sixth belt layer 36.

In the tread width direction twd, the width of the inner crossing belt group 30A is not less than 25% and not more than 70% of the tread surface 5a. In the tread width direction twd, the width of the intermediate crossing belt group 30B is not less than 55% and not more than 90% of the width TW of the tread surface 5a. In the tread width direction twd, the width of the outer crossing belt group 30C is not less than 60% and not more than 110% of the width TW of the tread surface 5a.

In the tread surface view, the inclination angle of a belt cord of the inner crossing belt group 30A with respect to the carcass cord is not less than 70 degrees and not more than 85 degrees. In the tread surface view, the inclination angle of a belt cord of the intermediate crossing belt group 30B with respect to the carcass cord is not less than 50 degrees and not more than 75 degrees. In the tread surface view, the inclination angle of a belt cord of the outer crossing belt group 30C with respect to the carcass cord is not less than 50 degrees and not more than 70 degrees.

In the tread surface view, the inclination angle of the belt cord of the inner crossing belt group 30A with respect to the carcass cord is largest. The inclination angle of the belt cord of the intermediate crossing belt group 30B with respect to the carcass cord is not less than the inclination angle of the belt cord of the outer crossing belt group 30C with respect to the carcass cord.

As shown in Figs. 1 and 2, in the tread portion 5, a plurality of grooves (circumferential grooves 50) extending in a tire circumferential direction tcd and a plurality of lateral groove portions (lug grooves 60) are formed. Further, in the tread portion 5, a plurality of land portions (circumferential land portions 70) partitioned by the plurality of circumferential grooves 50 and the plurality of lug grooves 60 are formed.

The plurality of circumferential grooves 50 extend along the tire circumferential direction tcd. The plurality of circumferential grooves 50 include circumferential grooves 50A, 50B, and 50C.

The circumferential groove 50A is a circumferential groove located on the outermost side in the tread width direction twd. The circumferential groove 50C is located on the tire equator line CL.

The circumferential groove 50B is located between the circumferential groove 50A and the circumferential groove 50C in the tread width direction twd. More specifically, the circumferential groove 50B is formed so that a length DL along the tread width direction twd from the belt end 30e to a groove center line WL passing through the center in a width direction of the circumferential groove 50B in the tread surface view of the tire is not more than 200 mm.

A plurality of protrusions 500 are provided in a groove bottom 50B2 of the circumferential groove 50B, as described later. Thus, a temperature around the tread portion 5 in which the circumferential groove 50B is located is decreased. Since the length DL in the tread width direction twd from the belt end 30e to the groove center line WL is not more than 200 mm, a temperature of the belt end 30e is decreased. Consequently, since deterioration due to heat of a rubber member around the belt end 30e is suppressed, peeling due to heat generation between the second belt layer 32 and its peripheral rubber member starting from the belt end 30e is suppressed. Since the peeling of the second belt layer 32 which is the shortest belt layer most easily affected by the heat generation of the tread portion 5 can be suppressed, durability of the tire 1 may be improved.

A tread portion of a heavy duty tire mounted on trucks, buses, construction vehicles, and the like has a large rubber gauge (thickness), and a volume of rubber is large. When such a heavy duty tire repeats deformation, a temperature of the tread portion increases. In such a heavy duty tire, the tread portion 5 outside in the tread width direction twd generates more heat than the tread portion 5 near the tire equator line CL. By virtue of the provision of the plurality of protrusions 500 in the groove bottom 50B2 of the circumferential groove 50B located outer side than the tire equator line CL, heat is efficiently radiated from the tread portion 5.

The lug groove 60 extends from the circumferential groove 50B to the buttress portion 9. The lug groove 60 has an opening portion 60a in the buttress portion 9. Accordingly, the lug groove 60 opens at the tread end portion 5e. The lug groove 60 communicates with the circumferential groove 50A and the circumferential groove 50B. An inner end of the lug groove 60 in the tread width direction twd communicates with the circumferential groove 50B.

A width of the tread portion 5 from an end to the other end (the tread end portions 5e) in the tread width direction is represented by TW. In the present embodiment, the ends of the tread portion 5 indicate the ends in the tread width direction twd in a contact range in such a state that the tire is in contact with a road surface. The state in which the tire is in contact with a road surface indicates a state in which the tire is mounted on a normal rim, and a normal inner pressure and a normal load are applied.

In the tread surface view of the tire 1, the lug groove 60 extends while being inclined with respect to the tread width direction twd. The inclination angle φ of the lug groove 60 with respect to the tread width direction twd is not less than 15 degrees and not more than 60 degrees.

As shown in Fig. 1, when the tire 1 rotates in the rotational direction tr1, an airflow (relative wind) in an opposite direction to the rotational direction tr1 generated relatively to the rotation of the tire 1 generates. The lug groove 60 on the left side of Fig. 1 goes to the front side in the rotational direction tr1 as it goes outside in the tread width direction twd. In the lug groove 60, the inclination angle φ of the lug groove 60 with respect to the tread width direction twd is not less than 15 degrees and not more than 60 degrees. Thus, when the tire 1 rotates in the rotational direction tr1, it is possible to suppress collision of an airflow, entering inside the lug groove 60 from outside, against a side wall of the lug groove 60 near the opening portion 60a and stagnation of the airflow. As a result, the heat transfer coefficient inside the lug groove 60 is enhanced, and the airflow smoothly reaches the circumferential groove 50B; therefore, the temperature of the tread portion 5 can be decreased.

Meanwhile, when the tire 1 rotates in the rotational direction tr1, in the tread portion 5 on the right side of Fig. 1 an airflow (relative wind) in an opposite direction to the rotational direction tr1 generated relatively to the rotation of the tire 1 generates. Since the inclination angle φ of the lug groove 60 with respect to the tread width direction twd is not less than 15 degrees and not more than 60 degrees, the air inside the lug groove 60 easily flows along the lug groove 60. As a result, discharge of the air from the lug groove 60 to outside is promoted in the tread width direction twd, and the flow rate of air flowing inside the lug groove 60 can be increased. Consequently, the heat transfer coefficient of the lug groove 60 is improved, and the temperature of the tread portion 5 can be decreased.

In addition, the air flowing in the circumferential groove 50B easily flows into the lug groove 60. Since air passing through the inside of the circumferential groove 50B and thereby accumulating heat flows outside through the lug groove 60, heat radiation from the tread portion 5 is promoted.

Since the inclination angle φ is not more than 60 degrees, block rigidity of land blocks 100 and 200 to be described later can be secured. As a result, deformation of the land blocks 100 and 200 accompanied with the rotation of the tire 1 is suppressed, and increase in a heat generation of the tread portion 5 can be suppressed.

A plurality of the circumferential land portions 70 extends along the tire circumferential direction. The circumferential land portions 70 include circumferential land portions 70A, 70B, and 70C.

The circumferential land portion 70A is a circumferential land portion located on the outermost side in the tread width direction twd. The circumferential land portion 70B is located between the circumferential land portion 70A and the circumferential land portion 70C in the tread width direction twd. The circumferential land portion 70C is a circumferential land portion located on the innermost side in the tread width direction twd.

The lug groove 60 is formed in the circumferential land portion 70A and the circumferential land portion 70B. The land blocks 100 and 200 partitioned by the lug groove 60 are provided in the tread portion 5. Namely, the land block 100 is formed by dividing the circumferential land portion 70A by the lug groove 60. The land block 200 is formed by dividing the circumferential land portion 70B by the lug groove 60.

In the present embodiment, as an example of the tire 1, a radial tire with an aspect ratio of not more than 80%, a rim diameter of not less than 57", a maximum load rating of not less than 60 mton, and a load coefficient (k-factor) of not less than 1.7 is supposed. The tire 1 is not limited to the radial tire of the present embodiment.

### (2) Schematic Configuration of Air Supply Mechanism

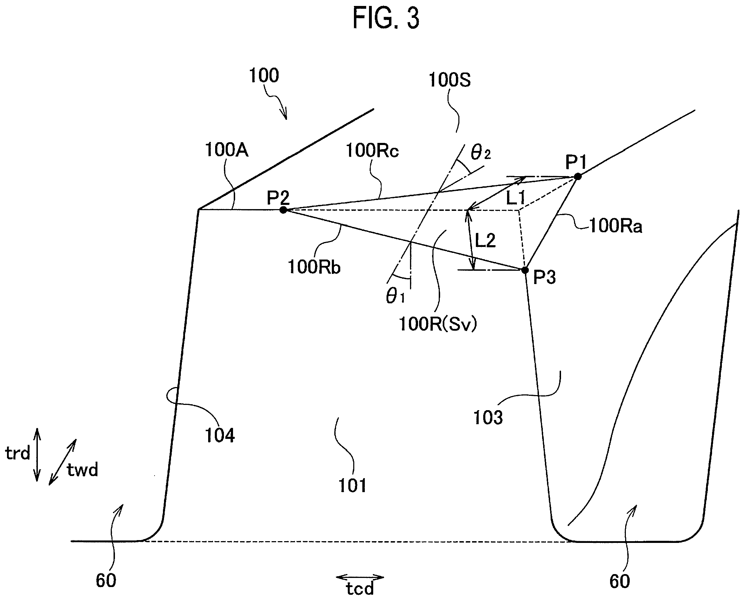

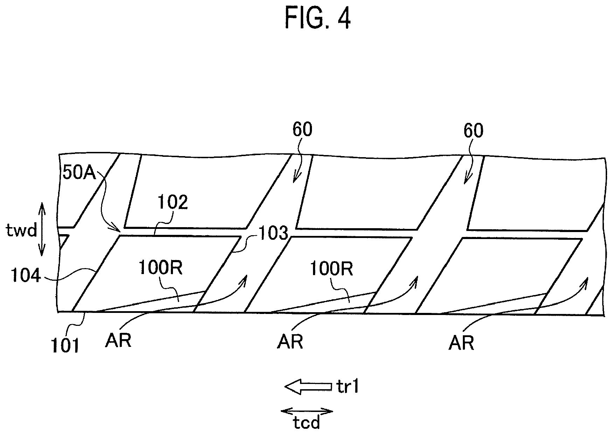

A schematic configuration of an air supply mechanism according to the present embodiment will be described with reference to Figs. 1 to 4. Fig. 3 is an enlarged perspective view showing the enlarged land block 100. Fig. 4 is a plan view of the circumferential land portion 70A in a tread surface view.

The tire 1 is provided with an air supply mechanism for supplying air to a lateral groove portion (the lug groove 60). In the present embodiment, the air supply mechanism is configured of a tapered surface 100R.

As shown in Figs. 1 to 4, the land block 100 has a tread surface 100S abutted against a road surface, a side surface 101 formed outside in the tread width direction twd of the land block 100, a side surface 102 located inward in the tread width direction twd of the land block 100, a lateral groove surface 103 formed on one side of the tire circumferential direction tcd of the land block 100 and forming a groove wall of the lug groove 60, and a lateral groove surface 104 formed on the other side of the tire circumferential direction tcd of the land block 100 and forming the groove wall of the lug groove 60. The land block 100 has, at a corner portion 100A formed by a tread surface 100S, the side surface 101, and the lateral groove surface 103, a tapered surface 100R crossed with the tread surface 100S, the side surface 101, and the lateral groove surface 103. The corner portion 100A configures the tread end portion 5e of the tread portion 5 described above.

The side surface 101 is formed on the buttress portion 9 side of the land block 100. The side surface 101 extends along the tire circumferential direction tcd. The side surface 101 is continued to the lateral groove surfaces 103 and 104 of the land block 100 forming the groove wall of the lug groove 60. The side surface 102 is formed to face the side surface 101 in the tread width direction twd. The side surface 102 forms a groove wall of the circumferential groove 50A adjacent to inward in the tread width direction twd of the land block 100.

The lateral groove surface 103 extends in the tread width direction twd. The lateral groove surface 103 is located on one side of the tire circumferential direction tcd of the land block 100. The lateral groove surface 104 extends in the tread width direction twd. The lateral groove surface 104 is located on the other side of the tire circumferential direction tcd of the land block 100.

The tapered surface 100R extends toward the tire circumferential direction tcd at the corner portion 100A formed by the tread surface 100S and the side surface 101. The tapered surface 100R is inclined inward in the tire radial direction trd as it goes to one side of the tire circumferential direction tcd in a cross section in the tire circumferential direction tcd and the tire radial direction trd of the land block 100. The tapered surface 100R is inclined inward in the tire radial direction trd as it goes outward in the tread width direction twd in a cross section in the tread width direction twd and the tire radial direction trd of the land block 100.

Namely, the tapered surface 100R is formed so as to chamfer the top in which tread surface 100S, the side surface 101, and the lateral groove surface 103 intersect with each other. In other words, the tapered surface 100R is formed to have at least one side in each surface among the tread surface 100S, the side surface 101, and the lateral groove surface 103.

The tapered surface 100R has one side in the side surface 101 of the side surface 101 and the side surface 102 in the tread width direction twd of the land block 100 and does not have one side in the side surface 102. Namely, in the land block 100, one (the side surface 102) of the side surface 101 and the side surface 102 opposed to each other in the tread width direction twd does not intersect with the tapered surface 100R.

Further, the tapered surface 100R has one side in the lateral groove surface 103 of the lateral groove surface 103 and the lateral groove surface 104 in the tire circumferential direction tcd of the land block 100 and does not have one side in the lateral groove surface 104. Namely, in the land block 100, one (the lateral groove surface 104) of the lateral groove surface 103 and the lateral groove surface 104 opposed to each other in the tire circumferential direction tcd does not intersect with the tapered surface 100R.

As described above, by virtue of the formation of the tapered surface 100R, air flowing along the tapered surface 100R during rotation of the tire 1 easily impinges against the lateral groove surface 104 of another land block 100 adjacent in the tire circumferential direction tcd. Namely, the air flowing along the tapered surface 100R is easily taken into the lug groove 60 adjacent in the tire circumferential direction tcd of the land block 100.

In the present embodiment, the tapered surface 100R has a planar shape. Namely, the shape of the tapered surface 100R linearly extends in the cross section in the tire circumferential direction tcd and the tire radial direction trd or the cross section in the tread width direction twd and the tire radial direction trd.

As shown in Fig. 3, when a plane Sv passing through a top P2 in which the tapered surface 100R, the tread surface 100S, and the side surface 101 intersect with each other, a top P1 in which the tapered surface 100R, the tread surface 100S, and the lateral groove surface 103 intersect with each other, and a top P3 in which the tapered surface 100R, the side surface 101, and the lateral groove surface 103 intersect with each other is assumed, an angle θ2 formed by the plane Sv and the tread surface 100S is in the range of 0 degrees < θ2 < 45 degrees. Meanwhile, an angle θ1 formed by the plane Sv and the side surface 101 is in the range of 0 degrees < θ1 < 45 degrees. Namely, one of the angle θ1 of the angle θ2 may be in the range of 0 degrees < θ1 (or θ2) < 45 degrees. More preferably, the angle θ1 (or the angle θ2) is in the range of 10 degrees < θ1 (or θ2) < 30 degrees. In the present embodiment, since the tapered surface 100R has a planar shape, the tapered surface 100R and the plane Sv are the same surface.

It is preferable that the tapered surface 100R is formed so that an interval L2 in the tire radial direction trd between the top P1 and the top P3 is larger than an interval L1 in the tread width direction twd between the top P1 and the top P2. This depends on the following reason. Namely, when the interval L2 is longer than the interval L1, even if wear of the land block 100 progresses from the tread surface 100S, the tapered surface 100R more easily remains. Namely, the durability of the effect of the tapered surface 100R can be improved. The interval L2 is more preferably not less than 50 mm.

In the tire 1, the land block 100 has, at the corner portion 100A formed by the tread surface 100S and the side surface 101 located outside in the tread width direction twd, the tapered surface 100R intersecting with the tread surface 100S, the side surface 101, and the lateral groove surface 103.

Thus, as shown in Fig. 4, when the tire 1 rotates in the rotational direction tr1, an airflow (relative wind) AR generated by the rotation of the tire 1 and flowing in an opposite direction to the rotational direction tr1 flows along the tapered surface 100R. The airflow AR flowing along the tapered surface 100R impinges against the lateral groove surface 104 of the land block 100 arranged behind in the rotational direction tr1 and is guided into the lug groove 60. Thus, the airflow AR is formed from the side surface 101 of the land block 100 to the lug groove 60. Namely, air around the tire 1 is taken into the lug groove 60, and the flow rate of air flowing inside the lug groove 60 can be increased. Consequently, the heat transfer coefficient inside the lug groove 60 is enhanced, and the temperature of the tread portion 5 can be decreased.

When the tire 1 rotates in a rotational direction tr2, the airflow (relative wind) AR generated inside the lug groove 60 and flowing in an opposite direction to the rotational direction tr2 flows out along the tapered surface 100R due to the rotation of the tire 1. Thus, discharge of air from the lug groove 60 to outside in the tread width direction twd is promoted, and the flow rate of the air flowing inside the lug groove 60 can be increased. Consequently, the heat transfer coefficient inside the lug groove 60 is enhanced. In addition, the temperature of the tread portion 5 can be decreased.

### (3) Schematic Configuration of Recessed portion 300

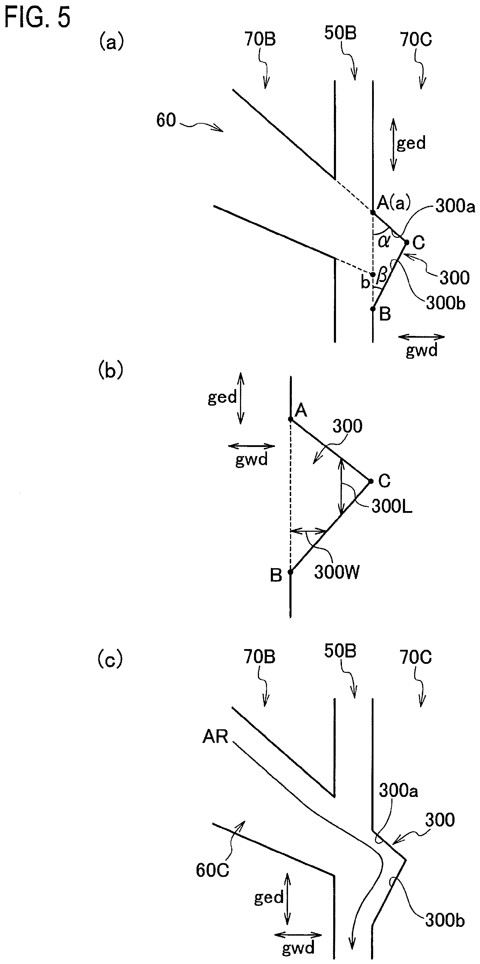

A schematic configuration of a recessed portion 300 according to the present embodiment will be described with reference to Fig. 5. Figs. 5(a) to 5(c) are enlarged plan views of the recessed portion 300 in the tread surface view.

As shown in Figs. 5(a) to 5(c), the recessed portion 300 is formed in the circumferential land portion 70C. The recessed portion 300 is located in an extending direction of the lug groove 60. The recessed portion 300 is formed on a groove wall surface of the circumferential land portion 70C opposed to the lug groove 60.

In the present embodiment, the recessed portion 300 has a triangular shape in a tread plan view. In the tread plan view, one wall surface 300a of the recessed portion 300 extends along an extension line of one wall surface of the lug groove 60, and the other wall surface 300b of the recessed portion 300 intersects with an extension line of the other wall surface of the lug groove 60. In the tread plan view, a point at which the groove wall surface of the circumferential land portion 70C opposed to the lug groove 60 and the extension line of one wall surface of the lug groove 60 intersect with each other is an intersect a, and a point at which the groove wall surface of the circumferential land portion 70C opposed to the lug groove 60 and the extension line of the other wall surface of the lug groove 60 intersect with each other is an intersect b. In the tread plan view, an end A of the wall surface 300a on the circumferential groove 50B side and the intersection a are located at the same position, and an end B of the wall surface 300b on the circumferential groove 50B side and the intersection b are located at different positions. The end B is not located between the intersection a and the intersection b. Accordingly, a length from the end A to the end B is larger than a length from the intersection a to the intersection b. In the tread plan view, a contact between the wall surface 300a and the wall surface 300b is a top C.

In the tread plan view, an angle formed by an extension line along the groove wall surface of the circumferential land portion 70C opposed to the lug groove 60 and the wall surface 300a is an angle α, and an angle formed by the extension line along the groove wall surface of the circumferential land portion 70C opposed to the lug groove 60 and the wall surface 300b is an angle β. In the present embodiment, the angle β is smaller than the angle α. It is preferable that 20 degrees ≤ α ≤ 70 degrees and β ≤ 45 degrees are satisfied.

The recessed portion 300 is formed so that the center of the recessed portion 300 in the extending direction of the circumferential groove 50B deviates from a lug groove center line passing through a center in the extending direction of the lug groove 60, in a direction perpendicular to the extending direction of the lug groove 60. The center of the recessed portion 300 is at least one of the center of a straight line connecting the end A and the end B and the top C.

As shown in Fig. 5 (b), in the recessed portion 300, a length 300W in the tread width direction twd changes along the tire circumferential direction tcd. Namely, in the tire circumferential direction tcd, the length 300W gradually increases as it goes from the end B to the top C. In the tire circumferential direction tcd, the length 300W gradually decreases as it goes from the top C to the end A.

In the recessed portion 300, a length 300L in the tire circumferential direction tcd decreases from a side opening in the circumferential groove 50B toward the depth. Namely, in the length 300L, the distance between the end A and the end B is largest, and the length 300L decreases as it goes to the top.

As shown in Fig. 5(c), by virtue of the formation of the recessed portion 300, the airflow AR flowing from outside to inside in the tread width direction twd along the lug groove 60 impinges against the wall surface 300b of the recessed portion 300. In Fig. 5(c), since the wall surface 300a is located above the wall surface 300b, the airflow AR is less likely to flow above the wall surface 300b. Thus, the airflow AR smoothly flows while being guided into the circumferential groove 50B.

Since the airflow AR is formed in one side of the tire circumferential direction tcd by the formation of the recessed portion 300, the airflow AR is less likely to stagnate in the circumferential groove 50B. As a result, the heat transfer coefficient inside the circumferential groove 50B is enhanced, and the temperature of the tread portion 5 can be decreased.

### (4) Schematic Configuration of Protrusion portion 500

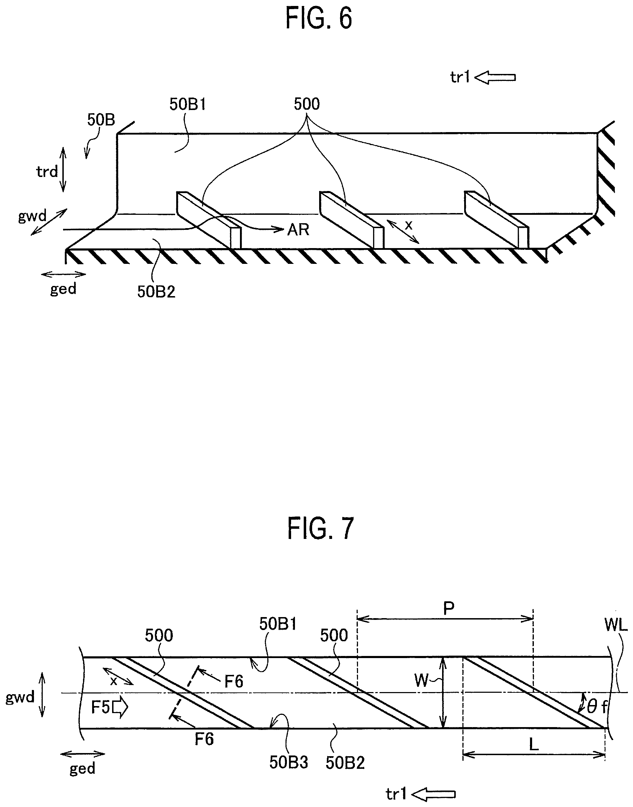

A schematic configuration of the protrusion portion 500 according to the present embodiment will be described with reference to Figs. 6 to 9.

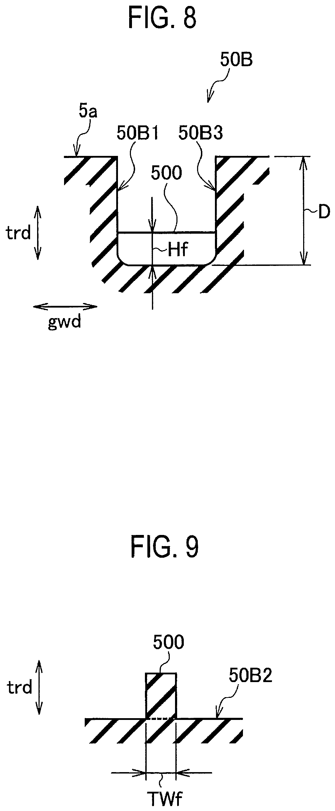

Fig. 6 is a partial cutaway perspective view of the circumferential groove 50B. Fig. 7 is a view showing a shape in the tread plan view (a view point from above the tread portion 5) of the circumferential groove 50B. Fig. 8 is a view showing the shape of the circumferential groove 50B from an F5 direction of Fig. 7. Fig. 9 is a cross-sectional view of the circumferential groove 50B (the protrusion portion 500) along a line F6-F6 of Fig. 7.

As shown in Figs. 6 to 9, the groove bottom 50B2 of the circumferential groove 50B is provided with a plurality of the protrusions 500.

In the present embodiment, the protrusions 500 are provided at predetermined intervals P in the circumferential groove 50B. The protrusion portion 500 extends from one side wall 50B1 forming the circumferential groove 50B toward the other side wall 50B3. In the present embodiment, the protrusion portion 500 continues from the one side wall 50B1 to the other side wall 50B3. Namely, the protrusion portion 500 is provided throughout the entire groove width W of the circumferential groove 50B. In the present embodiment, the side wall 50B1 and the side wall 50B3 extend substantially in parallel to the tire circumferential direction, and the side wall 50B1 and the side wall 50B3 are formed to face each other.

The protrusion portion 500 is provided upright outside in the tire radial direction from the groove bottom 50B2 of the circumferential groove 50B. In the present embodiment, the protrusion portion 500 is formed of plate-shaped rubber rising from the groove bottom 50B2 and provided to be inclined with respect to the tire circumferential direction.

More specifically, as shown in Fig. 7, an angle θf formed by the groove center line WL and the protrusion portion 500 is not less than 10 degrees and not more than 60 degrees. The angle θf is an angle formed by an extending direction x of the protrusion portion 500 and the groove center line WL passing through the center in the width direction of the circumferential groove 50B in the tread surface view of the tire 1 and is an angle formed on the opposite side of the rotational direction of the tire 1. Namely, the angle θf is an angle formed on the running direction side of the airflow AR generated by rolling of the tire 1 in the rotational direction tr1.

Further, in the tread surface view of the tire 1, when a length of the protrusion portion 500 along the groove center line WL is L, and the predetermined interval is P, the protrusion portion 500 provided in the circumferential groove 50B satisfies a relationship of 0.75L ≤ P ≤ 10L.

Since the protrusion portion 500 satisfies the relationship of 0.75L ≤ P, the number of the protrusions 500 provided in the circumferential groove 50B does not become too large, and reduction in the velocity of air flowing in the circumferential groove 50B can be suppressed. Since the protrusion portion 500 satisfies the relationship of P ≤ 10L, the number of the protrusions 500 provided in the circumferential groove 50B does not become too small, and an airflow AR1 is efficiently changed to a spiral (swirl-shaped) flow.

Further, it is preferable that a relationship of 1.25L < P is satisfied. It is more preferable that a relationship of 1.5L < P is satisfied, and it is still more preferable that a relationship of 2.0L < P is satisfied. By satisfying those relationships, the number of the protrusions 500 provided in the circumferential groove 50B becomes more suitable. Since the area of the groove bottom 50B2 through which the airflow AR passes does not become too small, heat is efficiently radiated from the groove bottom 50B2.

The length L is a length from one end to the other end of the protrusion portion 500 in an extending direction ged of the circumferential groove 50B (the tire circumferential direction in the present embodiment). An interval P is a distance between the centers of the protrusions 500 at which the protrusions 500 and the groove center line WL intersect with each other.

When a distance from the side wall 50B1 to the side wall 50B3 of the circumferential groove 50B is the groove width W, the length L can be represented as W/tanθf + TWf/sinθf. Here, as shown in Fig. 9, the protrusion width TWf is a width of the protrusion portion 500 in the lateral direction of the protrusion portion 500, that is, in a direction perpendicular to the extending direction x of the protrusion portion 500.

As shown in Fig. 8, when a height from the groove bottom 50B2 of the protrusion portion 500 is Hf, and a depth from the tread surface 5a to the groove bottom 50B2 (deepest portion) of the circumferential groove 50B is D, the protrusion portion 500 satisfies a relationship of 0.03D < Hf ≤ 0.4D. When the groove width of the circumferential groove 50B is W, the groove bottom 50B2 is flat at least in a width of 0.2 W. Namely, a central portion including the groove center line WL in the groove width W of the groove bottom 50B2 has no unevenness, and the surface of the groove bottom 50B2 is smooth.

When the groove width of the circumferential groove 50B is W, and the width of the protrusion portion 500 in the direction perpendicular to the extending direction x of the protrusion portion 500 is TWf, a relationship of TWf/cosθf ≤ 0.9 W is satisfied. It is preferable that the protrusion portion 500 is provided so as to satisfy a relationship of 0.2 ≤ TWf. Since the protrusion width TWf can be secured by satisfying the relationship of 0.2 ≤ TWf, the durability of the protrusion portion 500 is improved. Since damage to the protrusion portion 500 during use of the tire 1 can be suppressed, temperature increase of the tread portion 5 accompanied with running of a vehicle can be effectively suppressed.

The length L is in a range of from 10 mm to 100 mm, for example. The interval P is in a range of from 1.25 mm to 4.00 mm, for example. The protrusion height Hf is in a range of from 5 mm to 15 mm, for example. The protrusion width TWf is in a range of from 0.5 mm to 10 mm, for example. The depth D is in a range of from 40 mm to 120 mm, for example. The groove width W of the groove bottom 50B2 is in a range of from 5 mm to 20 mm, for example.

### (5) Operations and Effects

According to the tire 1, the plurality of protrusions 500 are provided in the groove bottom 50B2 of the circumferential groove 50B, and each of the protrusions 500 extends from one side wall 50B1 forming the circumferential groove 50B toward the other side wall 50B3 opposed to the one side wall 50B1. The protrusions 500 are provided at predetermined intervals in the circumferential groove 50B, satisfy the relationship of 0.75L ≤ P ≤ 10L, and a length along the tread width direction twd from the belt end 30e of the second belt layer 32, which is the shortest belt layer in the tread width direction twd, to the groove center line WL is not more than 200 mm.

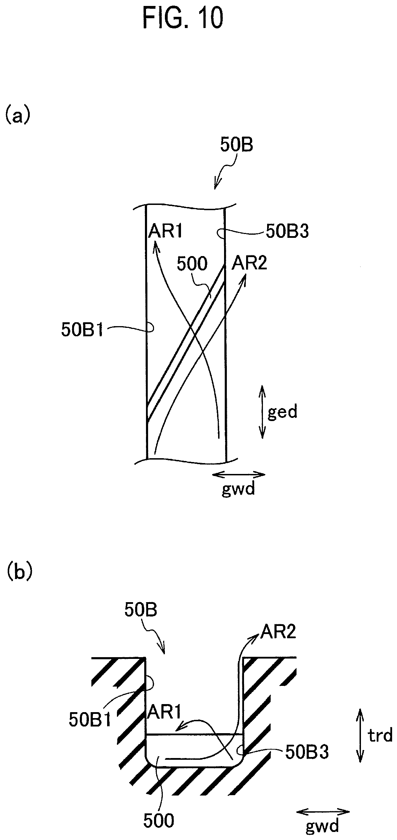

Airflows AR1 and AR2 (relative winds) generated by the rotation of the tire 1 and flowing in an opposite direction to the rotational direction tr1 are generated in the circumferential groove 50B. As shown in Figs. 10 (a) and 10 (b), the airflow AR1 along the side wall 50B3 on the end side of the protrusion portion 500 located far from the airflow cannot advance along the circumferential groove 50B because the protrusion portion 500 is located in the advancing direction. Accordingly, the airflow AR1 advances while being inclined with respect to the extending direction of the circumferential groove 50B, and overrides the protrusion portion 500. According to this constitution, the airflow AR1 is changed to a spiral (swirl-shaped) flow. Since the airflow AR1 advances while involving ambient air, the flow rate of air increases, and, at the same time, the velocity of the airflow AR1 increases. Consequently, the heat radiation from the rubber member constituting the periphery of the circumferential groove 50B is promoted.

An airflow AR2 along the side wall 50B1 on the end side of the protrusion portion 500 located near the airflow advances along the extending direction of the protrusion portion 500. Then, the airflow AR2 flows outside the circumferential groove 50B on the other side wall 50B3 side of the circumferential groove 50B. Since an air passing through the inside of the circumferential groove 50B and thereby accumulating heat flows outside, the heat radiation from the rubber member constituting the periphery of the circumferential groove 50B is promoted.

Since the protrusion portion 500 satisfies the relationship of 0.75L ≤ P, the number of the protrusions 500 provided in the circumferential groove 50B does not become too large, and reduction in the velocity of the air flowing in the circumferential groove 50B can be suppressed. Since the protrusion portion 500 satisfies the relationship of P ≤ 10L, the number of the protrusions 500 provided in the circumferential groove 50B does not become too small, and the airflow AR1 is efficiently changed to a spiral (swirl-shaped) flow. Consequently, the heat radiation from the rubber member constituting the periphery of the circumferential groove 50B is promoted.

As described above, since the temperature around the tread portion 5 in which the circumferential groove 50 is located is decreased. Since the length DL in the tread width direction twd from the belt end 30e to the groove center line WL is not more than 200 mm, a temperature of the belt end 30e is decreased. Consequently, since deterioration due to heat of a rubber member around the belt end 30e is suppressed, peeling due to heat generation between the second belt layer 32 and its peripheral rubber member starting from the belt end 30e is suppressed. Further, the peeling of the second belt layer 32 which is the shortest belt layer most easily affected by the heat generation of the tread portion 5 can be suppressed. Accordingly, the temperature increase of the tread portion 5 accompanied with running of a vehicle can be effectively suppressed, and the durability of the tire can be improved.

It is preferable that the relationship of 1.25L < P is satisfied. According to this, the number of the protrusions 500 provided in the circumferential groove 50B becomes more suitable. Since the area of the groove bottom 50B2 through which the airflow AR passes does not become too small, heat is efficiently radiated from the groove bottom 50B2.

Further, it is preferable that the angle θf formed by the extending direction of the protrusion portion 500 and the groove center line WL is not less than 10 degrees and not more than 60 degrees. When the angle θf is not less than 10 degrees, an acute-angled portion formed by the protrusion portion 500 and the side wall 50B1 (or the side wall 50B3) can suppress weakening of the airflow AR flowing in the circumferential groove 50B. In addition, the protrusion portion 500 can be easily manufactured in the circumferential groove 50B. When the angle θf is not more than 60 degrees, the airflow AR2 flowing in the circumferential groove 50B can be efficiently changed to a spiral flow. Thus, the air volume passing through the groove bottom 50B2 increases, and heat is efficiently radiated from the tread portion 5.

Furthermore, it is preferable that the relationship of 0.03D < Hf ≤ 0.4D is satisfied. When the relationship of 0.03D < Hf is satisfied, the height Hf of the protrusion portion 500 reaches not less than a predetermined height, and therefore, the airflow AR2 flowing in the circumferential groove 50B can be efficiently changed to a spiral flow. Thus, the air volume passing through the groove bottom 50B2 increases, and heat is efficiently radiated from the tread portion 5. By satisfying the relationship of Hf ≤ 0.4D, the airflow AR1 changed to the spiral flow easily arrives at the groove bottom 50B2. Thus, heat is efficiently radiated from the groove bottom 50B2.

The groove bottom 50B2 is flat at least in a width of 0.2 W. According to this constitution, since the airflow AR passing through the groove bottom 50B2 is not impeded, the temperature increase of the tread portion 5 can be further effectively suppressed.

It is preferable that DC/OD ≥ 0.015 is satisfied. In a tire satisfying DC/OD ≥ 0.015, since the tread portion 5 has a large rubber gauge, heat is easily accumulated in the tread portion 5. Thus, in the tire satisfying DC/OD ≥ 0.015, a failure due to the temperature increase of the tread portion 5 can be suppressed by effectively suppressing the temperature increase of the tread portion 5 accompanied with running of a vehicle.

The protrusion portion 500 is continued from the one side wall 50B1 to the other side wall 50B3. According to this constitution, since the airflow AR1 advancing along the protrusion portion 500 can override the protrusion portion 500 near the side wall 50B3, the airflow AR1 is efficiently changed to a spiral (swirl-shaped) flow. Thus, heat is efficiently radiated from the tread portion 5.

In the tread width direction twd, the width of the inner crossing belt group 30A is not less than 25% and not more than 70% of the tread surface 5a, the width of the intermediate crossing belt group 30B is not less than 55% and not more than 90% of the width TW of the tread surface 5a, and the width of the outer crossing belt group 30C is not less than 60% and not more than 110% of the width TW of the tread surface 5a. Further, in the tread surface view, the inclination angle of a belt cord of the inner crossing belt group 30A with respect to the carcass cord is not less than 70 degrees and not more than 85 degrees, the inclination angle of a belt cord of the intermediate crossing belt group 30B with respect to the carcass cord is not less than 50 degrees and not more than 75 degrees, and the inclination angle of a belt cord of the outer crossing belt group 30C with respect to the carcass cord is not less than 50 degrees and not more than 70 degrees.

In a tire having the above belt structure, since the number of the belt layers 30 is large, peeling between the belt layer 30 and the rubber member is likely to occur. Accordingly, the durability of the tire can be improved by applying the present invention to the tire having such a belt structure.

### (6) Comparative evaluation

In order to confirm the effect of the tire according to the present invention, the following measurement was performed. The invention is not limited to the following examples.

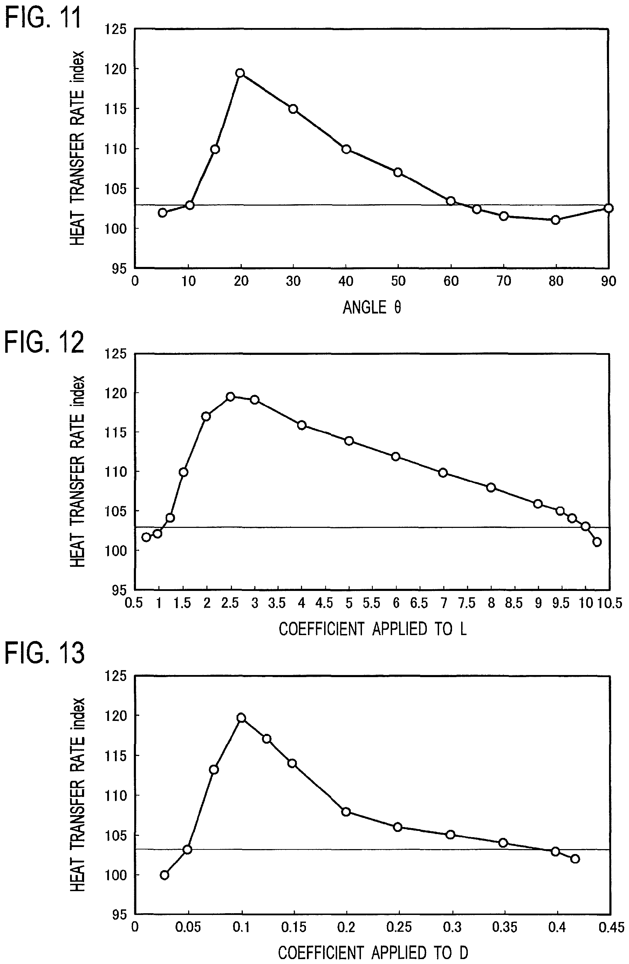

As a test tire, a tire for mine vehicles (59/80R63) was used. A protrusion was provided in a circumferential groove, and the angle θf formed by a groove center line and the protrusion, a coefficient to be multiplied to the length L, and a coefficient to be multiplied to the groove depth D were changed, and the heat transfer coefficient in the case where the rotational speed of the tire was 20 km/h was measured. The heat transfer coefficient in the case without protrusion was set to 100 and was compared with the measured heat transfer coefficient. The results are shown in Figs. 11 to 13. Fig. 11 shows a relationship between the angle θf and the heat transfer coefficient (index indication) in a circumferential groove. Fig. 12 shows a relationship between the coefficient to be multiplied to the length L of the protrusion and the heat transfer coefficient in the circumferential groove. Fig. 13 shows a relationship between the coefficient to be multiplied to the groove depth D and the heat transfer coefficient in the circumferential groove.

As shown in Fig. 11, it was found that when the angle θf was not less than 10 degrees and not more than 60 degrees, the heat transfer coefficient was good. In particular, it was found that when the angle θf was not less than 15 degrees and not more than 40 degrees, the heat transfer coefficient was better.

As shown in Fig. 12, it was found that when the coefficient to be multiplied to the length L was not less than 0.75 and not more than 10, the heat transfer coefficient was good. It was found that when the coefficient to be multiplied to the length L was not less than 1.25, the heat transfer coefficient was better. It was found that when the coefficient to be multiplied to the length L was not less than 1.5 and not more than 7, the heat transfer coefficient was further better.

As shown in Fig. 13, it was found that when the coefficient to be multiplied to the groove depth D was not less than 0.03 and not more than 0.4, the heat transfer coefficient was good.

Next, in order to confirm the effect of a positional relationship between a circumferential groove and a belt end, the following measurement was performed using a tire similar to the above.

A load of 101.6 kN was applied to tires according to the following examples 1 to 11 and comparative examples 1 to 12, the tires were run at a speed of 8 km/h, and the durability of each tire was evaluated.

In the tires according to the examples and Comparative Example 12, a thickness of a tread gauge in the tire radial direction trd was 140 mm, a depth of the circumferential groove in the tire radial direction trd was 70 mm, and a width of the circumferential groove in the tread width direction was 10 mm. A groove bottom of the circumferential groove is provided with a protrusion. An angle θf of the protrusion was 20 degrees, an interval P between the protrusions was 2.5 mm, and a height Hf of the protrusion was 0.1 mm.

In the tire according to Example 1, the length DL in the tread width direction twd from a belt end to the groove center line WL of the circumferential groove was 0 mm. Namely, in the tread width direction twd, the belt end and the groove center line WL were at the same position. In the tire according to Example 2, the length DL was 20 mm. In the tire according to Example 3, the length DL was 40 mm. In the tire according to Example 4, the length DL was 60 mm. In the tire according to Example 5, the length DL was 80 mm. In the tire according to Example 6, the length DL was 100 mm. In the tire according to Example 7, the length DL was 120 mm. In the tire according to Example 8, the length DL was 140 mm. In the tire according to Example 9, the length DL was 160 mm. In the tire according to Example 10, the length DL was 180 mm. In the tire according to Example 11, the length DL was 200 mm. In the tire according to Comparative Example 12, the length DL was 220 mm.

In the tires according to the comparative examples (except for Comparative Example 12), the thickness of the tread gauge in the tire radial direction trd was 140 mm, the depth of the circumferential groove in the tire radial direction trd was 100 mm, and the width of the circumferential groove in the tread width direction was 10 mm. A groove bottom of the circumferential groove has no protrusion.

In the tire according to Comparative Example 1, the length DL was 0 mm. In the tire according to Comparative Example 2, the length DL was 20 mm. In the tire according to Comparative Example 3, the length DL was 40 mm. In the tire according to Comparative Example 4, the length DL was 60 mm. In the tire according to Comparative Example 5, the length DL was 80 mm. In the tire according to Comparative Example 6, the length DL was 100 mm. In the tire according to Comparative Example 7, the length DL was 120 mm. In the tire according to Comparative Example 8, the length DL was 140 mm. In the tire according to Comparative Example 9, the length DL was 160 mm. In the tire according to Comparative Example 10, the length DL was 180 mm. In the tire according to Comparative Example 11, the length DL was 200 mm.

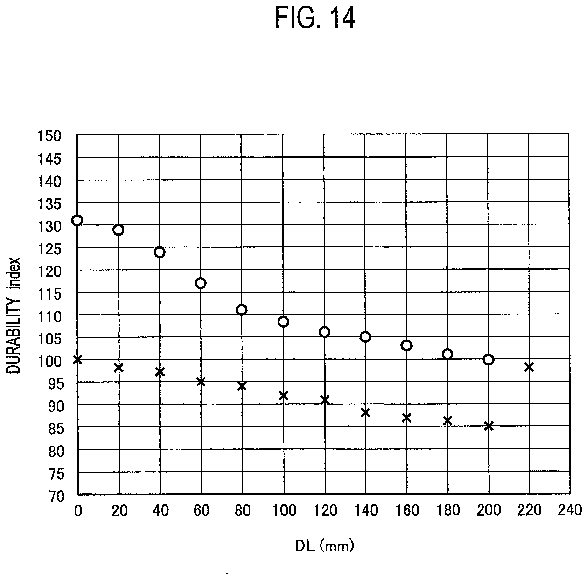

The results are shown in Table 1 and Fig. 14. Fig. 14 is a graph showing a relationship between the durability of each tire and the length DL. In Fig. 14, "○" shows the examples, and "×" shows the comparative examples. As the durability of the tire, the life of the tire of Comparative Example 1 was used as a reference (100), and other tires were indicated by indexes.

**[Table 1]**

| | Existence of Protrusion Portion | DL(mm) | Durability |
|---|---|---|---|
| Comparative Example 1 | × | 0 | 100 |
| Comparative Example 2 | × | 20 | 98 |
| Comparative Example 3 | × | 40 | 97 |
| Comparative Example 4 | × | 60 | 95 |
| Comparative Example 5 | × | 80 | 94 |
| Comparative Example 6 | × | 100 | 92 |
| Comparative Example 7 | × | 120 | 91 |
| Comparative Example 8 | × | 140 | 88 |
| Comparative Example 9 | × | 160 | 87 |
| Comparative Example 10 | × | 180 | 86 |
| Comparative Example 11 | × | 200 | 85 |
| Example 1 | ○ | 0 | 131 |
| Example 2 | ○ | 20 | 129 |
| Example 3 | ○ | 40 | 124 |
| Example 4 | ○ | 60 | 117 |
| Example 5 | ○ | 80 | 111 |
| Example 6 | ○ | 100 | 108 |
| Example 7 | ○ | 120 | 106 |
| Example 8 | ○ | 140 | 105 |
| Example 9 | ○ | 160 | 103 |
| Example 10 | ○ | 180 | 101 |
| Example 11 | ○ | 200 | 100 |
| Comparative Example 12 | ○ | 220 | 98 |

In the tires according to the examples, although the depth of the circumferential groove is small as compared with the tires of the comparative examples, the durability of the tires according to the examples was not less than 100, as shown in Table 1 and Fig. 14. Accordingly, in the tires according to the examples, it was found that the durability of the tire was improved.

It was fond that when the length DL was not less than 80 mm, the durability of the tire was more improved. It was found that when the length DL was not less than 40 mm, the durability of the tire was further improved.

### (7) Other embodiments

Although the contents of the present invention were disclosed through the embodiments of the present invention, it should not be understood that the discussion and drawings which form a part of this disclosure limit the present invention. The present invention includes various embodiments not described here.

The following respective embodiments and the above embodiments may be appropriately combined in a range where the effects of the present invention are not impaired.

### (7.1) Air supply mechanism

In the above embodiment, although the air supply mechanism is configured of the tapered surface 100R, the present invention is not limited thereto.

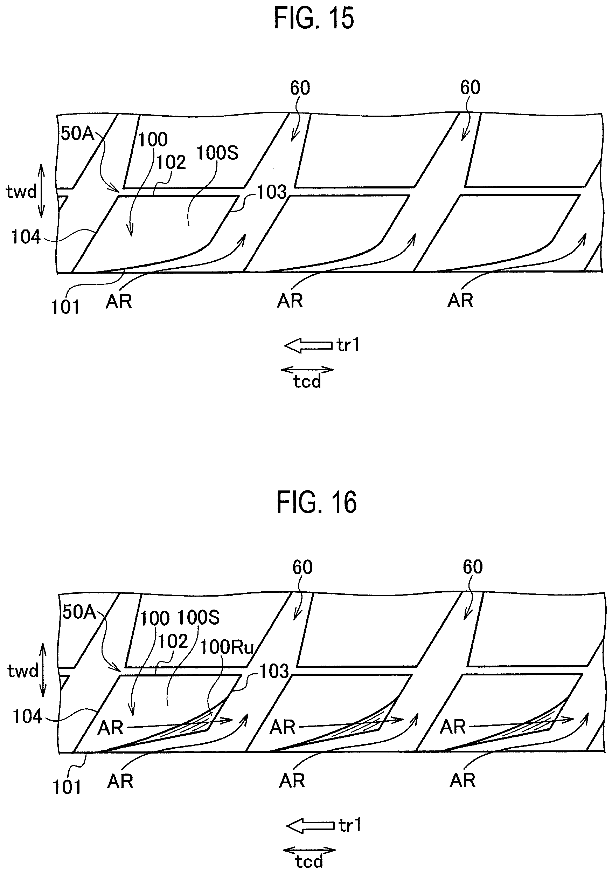

As shown in Figs. 15 and 16, for example, the length of the land block 100 in the tread width direction twd may become smaller as it goes from one side in the tire circumferential direction tcd to the other side.

Fig. 15 is a plan view of a circumferential land portion 70A in the tread surface view according to another embodiment.

One end 100D of a land block 100 in a tire circumferential direction tcd is located on the back side in a rotational direction tr1 in which the tire 1 rotates in a vehicle advancing direction when mounted on a vehicle. The other end 100E of the land block 100 in the tire circumferential direction tcd is located on the front side in the rotational direction tr1. A length La1 in a tread width direction in the end 100D is smaller than a length La2 in the tread width direction in the end 100E of the land block 100. A difference between the length Lb1 and the length La1 is represented by a length Lw1, and the length Lw1 is preferably not less than 5 mm.

A side surface 101 extends while being inclined inward the land block 100 with respect to a plane along the tire circumferential direction and is continued to a lateral groove surface 103 of the land block 100 constituting an inner wall of a lug groove 60. The end 100D of the land block 100 on the back side in the rotational direction in the tire circumferential direction tcd is located inward in the tread width direction twd by the length Lw1 from a side wall portion 7. Namely, the back side in the rotational direction in the tire circumferential direction tcd of the land block 100 of the buttress portion 9 is located inward in the tread width direction twd by a length Lw from the side wall portion 7. Thus, a step is formed between the buttress portion 9 and the side surface 101. A groove bottom 60b which is a groove bottom of the lug groove 60 extends from the end 100D on the back side in the rotational direction in the tire circumferential direction tcd toward the end 100E. The groove bottom 60b is located between the buttress portion 9 and the side surface 101.

As shown in Fig. 15, when the tire 1 rotates in the rotational direction tr1, an air flow (relative wind) AR generated by the rotation of the tire 1 and flowing in an opposite direction to the rotational direction tr1 flows along the side surface 101 of the land block 100. The airflow AR flowing along the side surface 101 impinges against the lateral groove surface 104 of the land block 100 arranged on the back side in the rotational direction tr1 and is guided into the lug groove 60. According to this constitution, air around the tire 1 is taken into the lug groove 60, and the flow rate of air flowing inside the lug groove 60 can be increased. Consequently, the heat transfer coefficient inside the lug groove 60 is improved, and the temperature of the tread portion 5 can be decreased.

Fig. 16 is a plan view of the circumferential land portion 70A in the tread surface view according to another embodiment. A round surface 100Ru having a curved surface shape is formed in a portion in which a top formed by a tread surface 100S of a tread portion 5 abutted against a road surface, the side surface 101, and the lateral groove surface 103 of the land block 100 of the tire 1 is formed. Namely, the top formed by the tread surface 100S, the side surface 101, and the lateral groove surface 103 is chamfered. As shown in Fig. 15, an area of the tread surface 100S of the tread portion 5 abutted against a road surface in the land block 100 of the tire 1 is smaller than an area of the land block 100 continued to the groove bottom 60b of the lug groove 60. The area of the land block 100 becomes larger as it goes to a connecting portion with the groove bottom 60b from the tread surface 100S abutted against a road surface.

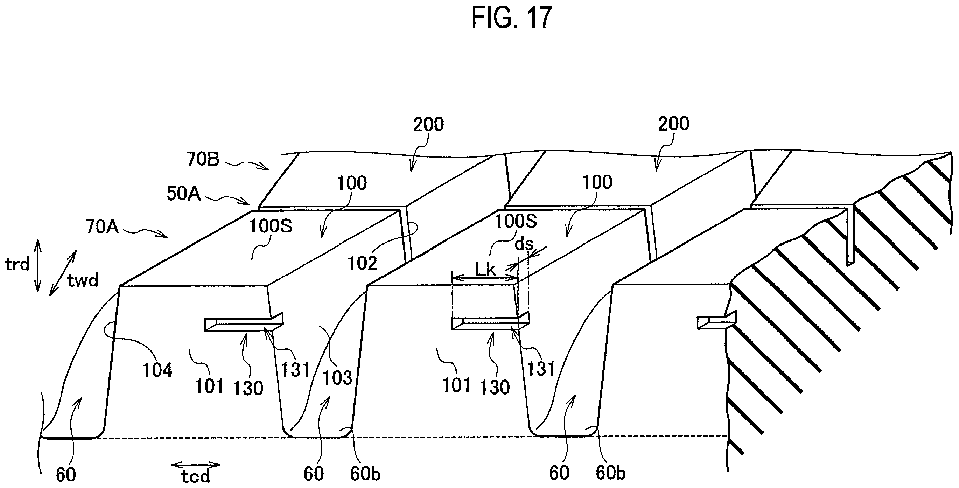

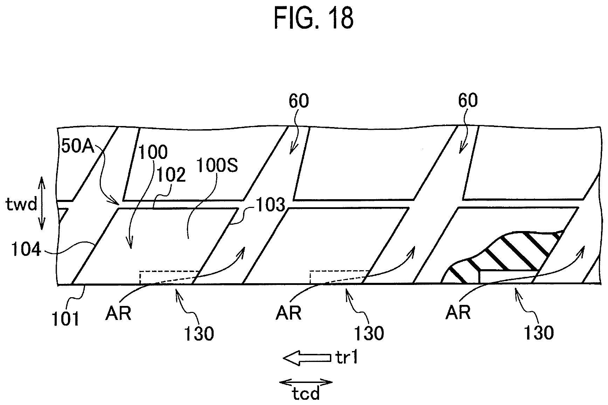

As shown in Figs. 17 and 18, a side surface 101 of a land block 100 is cut out inward the land block 100 from the side surface 101, and a cut-out portion 130 communicating with at least one of lug grooves 60 may be formed.

Fig. 17 is an enlarged perspective view of an enlarged tread portion 5 according to still another embodiment.

Fig. 18 is a plan view of a circumferential land portion 70A in the tread surface view according to another embodiment.

The cut-out portion 130 is formed in a buttress portion 9 which is a side surface intersecting in a tread width direction twd of the land block 100. The cut-out portion 130 is formed outside in a tire radial direction trd relative to a line mutually connecting groove bottoms 60b of a lug groove 60 formed before and after the land block 100 in a tire circumferential direction tcd.

The cut-out portion 130 is formed on one end side of the side surface 101 of the land block 100 in the tire circumferential direction tcd. The cut-out portion 130 is cut out inward (in the tread width direction twd) of the land block 100 from the side surface 101 and communicates with the lug groove 60 in the tire circumferential direction tcd. The opening 131 is formed in the side surface 101 and a lateral groove surface 103 of the land block 100.

A length Lk along a tire circumferential direction of the cut-out portion 130 is smaller than a length WB in the tire circumferential direction tcd of the land block 100.

A depth ds of the cut-out portion 130 in the tread width direction twd from the side surface 101 of the land block 100 of the cut-out portion 130 is constant throughout the tire circumferential direction tcd of the land block 100. An opening 131 of the cut-out portion 130 formed in the side surface 101 of the land block 100 has a rectangular shape as viewed from the tread width direction twd. The cut-out portion 130 is formed in parallel to a surface of the tread portion 5.

As shown in Fig. 18, when the tire 1 rotates in a rotational direction tr1, an airflow (relative wind) AR generated by the rotation of the tire 1 and flowing in an opposite direction to the rotational direction tr1 flows into the cut-out portion 130 and flows along the cut-out portion 130. The airflow AR flowing along the cut-out portion 130 impinges against a lateral groove surface 104 of the land block 100 arranged on the back side in the rotational direction tr1 and is guided into the lug groove 60. According to this constitution, air around the tire 1 is taken into the lug groove 60, and the flow rate of air flowing inside the lug groove 60 can be increased. Consequently, the heat transfer coefficient inside the lug groove 60 is improved, and the temperature of the tread portion 5 can be decreased.

In the cut-out portion 130, the depth ds of the cut-out portion 130 may become larger as it goes to the lug groove 60 communicating with the cut-out portion 130.

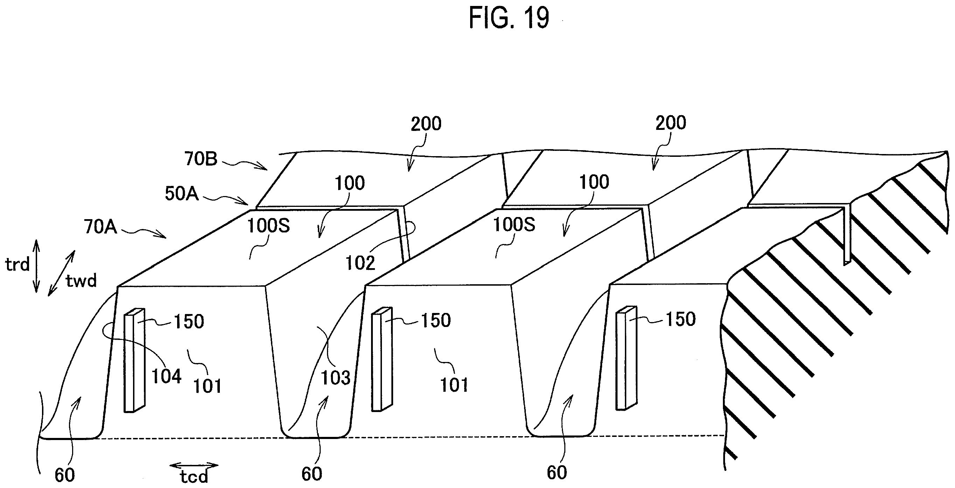

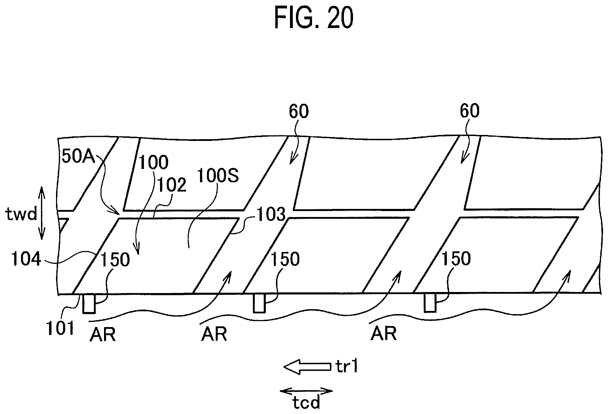

As shown in Figs. 19 and 20, a protrusion 150 protruding in a tread width direction twd may be formed on a side surface 101 of a land block 100.

Fig. 19 is an enlarged perspective view of an enlarged tread portion 5 according to yet another embodiment. Fig. 20 is a plan view of a circumferential land portion 70A in the tread surface view according to another embodiment.

The protrusion 150 is formed on the side of a lug groove 60 located on one side in a tire circumferential direction tcd of the side surface 101 of the land block 100. The other side in the tire circumferential direction tcd of the side surface 101 of the land block 100 is substantially smooth. The substantial smoothness allows fine unevenness due to manufacturing error. The fine unevenness is unevenness within ±10% of a length in the tread width direction twd of the land block 100, for example.

A length Lr along the tire circumferential direction tcd of the protrusion 150 is smaller than the length WB in the tire circumferential direction tcd of the land block 100 formed in the circumferential land portion 70A.

The protrusion 150 has a rectangular shape linearly extending in a tire radial direction trd, and the tire radial direction trd and a rectangular longitudinal direction may be inclined. In this case, an angle |γ| formed by a projection center line set at a central portion in the tire circumferential direction tcd of the protrusion 150 and a tire normal line (that is, the tire radial direction trd) may be set so that |γ| ≤ 60 degrees. The protrusion 150 shown in Figs. 19 and 20 is disposed so that the tire radial direction trd and the rectangular longitudinal direction coincide with each other, and the tread width direction twd and a rectangular lateral direction coincide with each other.

A plurality of the protrusions 150 may be formed on the side surface 101 of the land block 100. The protrusions 150 may be linearly arranged along the tire radial direction trd.

The plurality of protrusions 150 may be inclined with respect to the tire radial direction trd as viewed from the tread width direction twd.

The shape of the protrusion 150 may not be a rectangular shape. The protrusion 150 may have a triangular cross-sectional shape vertical to the longitudinal direction of the protrusion 150. The shape of the cross section vertical to the longitudinal direction of the protrusion 150 may be a trapezoidal shape of which long side is a root portion attached to the side surface 101 of the land block 100. The shape of the cross section vertical to the longitudinal direction of the protrusion 150 may be a trapezoidal shape of which short side is a root portion attached to the side surface 101 of the land block 100. The cross section vertical to the longitudinal direction of the protrusion 150 may have a shape inclined toward one side in the rotational direction. The protrusion 150 may have a parallelogram shape in plan view from a direction along a shaft core of a tire rotation shaft. The protrusion 150 may have a shape in which the width at the central portion in the longitudinal direction is smaller than the width of an end in the longitudinal direction in plan view from a direction along the shaft core of the tire rotation shaft. The protrusion 150 may have an elliptical shape in plan view from the direction along the shaft core of the tire rotation shaft. In addition to the above examples, any shape is applicable as long as a structure producing an effect of disturbing air passing through a surface of a tire is attained.

In the above embodiment, although the both land blocks 100 in the tread width direction twd each have the air supply mechanism, the present invention is not limited thereto. Only one of the land blocks 100 in the tread width direction twd may have the air supply mechanism. Meanwhile, the plurality of land blocks 100 may respectively have the air supply mechanisms having different shapes.

### (7.2) Protrusion

In the above embodiments, although the protrusion portion 500 has a flat plate shape, the present invention is not limited thereto. The protrusion portion 500 may have a wave shape in the tread surface view or a shape which is thick near the groove center line WL and becomes thinner as it goes to the side wall 50B1 and the side wall 50B3 (and vice versa).

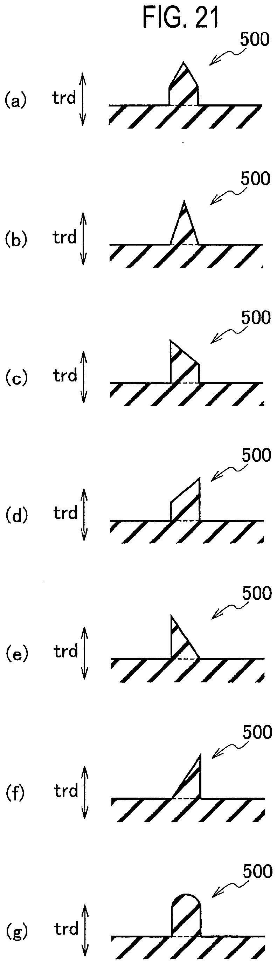

Figs. 21 (a) to (g) are views showing variations of the cross-sectional shape of the protrusion portion 500. As shown in Figs. 21 (a) to (g), in the cross-sectional shape of the protrusion portion 500 (similar to that of Fig. 9), the upper end may not be flat. In the cross-sectional shape of the protrusion portion 500, the upper end of the protrusion portion 500 may be inclined or may have a circular-arc shape.

The angle θf, the groove depth D, and the groove width W may not necessarily satisfy the conditions prescribed in the above embodiments.

Although the protrusions 500 are provided in only the circumferential groove 50B, the present invention is not limited thereto. The protrusions 500 may be formed in the circumferential groove 50C formed at a position including the tire equator line CL or in the circumferential groove 50C.

### (7.3) Others

In the above embodiments, although the circumferential groove 50B extends in parallel to the tire circumferential direction tcd, the present invention is not limited thereto. The circumferential groove 50B may not necessarily be parallel to the tire circumferential direction tcd. For example, the circumferential groove 50B may not be parallel to the tire circumferential direction tcd as long as the angle formed with the tire equator line CL is not more than 45 degrees. Further, the circumferential groove 50B may not necessarily be linear and may have a shape curved outward in the tread width direction twd or a zigzag shape, for example. When the circumferential groove 50B has a zigzag shape, it is preferable that the circumferential groove 50B has such a shape that the velocity of air flowing in the circumferential groove 50B is not reduced.

The lug groove 60 may extend to the circumferential groove 50C, and, at the same time, the protrusion portion 500 may be provided in the groove bottom of the circumferential groove 50. Namely, the circumferential groove provided with the protrusion portion 500 may be formed at a position including the tire equator line CL. According to this constitution, the temperature of the tread portion 5 can be decreased.

Although all the lug grooves 60 are formed to have the same angle in the tire circumferential direction tcd, the present invention is not limited thereto. In the same tire, the inclination angles φ of the lug grooves 60 may not be necessarily the same. The inclination angle φ of the lug groove 60 may be different between the lug groove 60 located on one end side in the tread width direction twd and the lug groove 60 located on the other end side. In the plurality of lug grooves 60 located on one end side in the tread width direction twd, the inclination angles φ of the lug grooves 60 may be different from each other.

In the tire 1 according to the present embodiment, although a marked effect can be obtained when the tire 1 is applied to so-called very large tires, the tire may be applied to general-purpose tires.

As the tire according to the present invention, a pneumatic tire may be used, or a solid tire filled with rubber may be used. Further, a tire containing a gas other than air, such as a noble gas, such as argon, or nitrogen may be used.

As mentioned above, it must be understood that the present invention includes various embodiments and the like that are not described herein. Accordingly, the scope of the present invention shall be defined only by the matters according to the claims that are appropriate from the description above.

### [Industrial Applicability]

The present invention can provide a tire that can effectively suppress a temperature increase of the tread portion 5 accompanied with running of a vehicle, and that can improve a durability of the tire.

## Claims

1. A tire (1) comprising:
a tread portion (5) with a groove portion (50B) formed to extend in a tire circumferential direction (tcd);
a plurality of protrusion portions (500) provided on a groove bottom (50B2) of the groove portion (50B), each of the protrusion portions (500) extending from one side walls forming the groove portion (50B) to the other side wall (50B3) opposed to the one side wall (50B1), the protrusion portions (500) arranged at predetermined intervals in the groove portion (50B), wherein
a relationship of 0.75L ≤ P ≤ 10L is satisfied when a length of the protrusion portion (500) along a groove center line (WL) passing through a center in a width direction of the groove portion (50B) is L, and the predetermined interval is P, in a tread surface view of the tire, further comprising
a plurality of belt layers (30) arranged in the tread portion (5) and extending in a tire circumferential direction (tcd) ;
a pair of bead cores (10); and
a carcass layer (20) which extends across the pair of the bead cores (10) and has a toroidal shape, wherein
the plurality of belt layers (30) include a shortest belt layer (32) whose length in a tread width direction (twd) is smallest, **characterised in that**,
a length along the tread width direction (twd) from an end (30e) of the shortest belt layer (32) in the tread width direction (twd) to the groove center line (WL) is not more than 200 mm, and
the plurality of belt layers (30) comprises an inner crossing belt group (30A) comprising a set of two belt layers (31, 32) and located outside the carcass layer (20) in a tire radial direction (trd), an intermediate crossing belt group (30B) comprising another set of two belt layers (33, 34) and located outside the inner crossing belt group (30A) in the tire radial direction (trd), and an outer crossing belt group (30C) comprising still another set of two belt layers (35, 36) and located outside the intermediate crossing belt group (30B) in the tire radial direction (trd), and
the inner crossing belt group (30A) includes the shortest belt layer (32).

2. The tire (1) according to claim 1, wherein an angle θf, which is an angle formed by an extending direction of the protrusion portions (500) and the groove center line (WL) in the tread surface view of the tire (1) and is an angle formed on a side opposite to a rotation direction of the tire (1), is not less than 10 degrees and not more than 60 degrees.

3. The tire (1) according to claim 1 or 2, wherein the relation of 0.03D<Hf<0.4D is satisfied, when a height of the protrusion portions (500) from the groove bottom (50B2) is Hf, and a depth from a tread surface of the groove portion (500) to the groove bottom (50B2) is D.

4. The tire (1) according to any one of claims 1 to 3, wherein the relation of DC/OD ≥ 0.015 is satisfied, when a tire outer diameter is OD and a rubber gauge of the tread portion (500) at a position of a tire equator line is DC.

5. The tire (1) according to any one of claims 1 to 4, wherein the protrusion portions (500) are continuous from the one side wall (50B1) to the other side wall (50B3).

6. The tire (1) according to any one of claims 1 to 5,
wherein the carcass layer (20) has a carcass cord extending in a predetermined direction,
the belt layer (30) include a belt cord extending while being inclined with respect to the predetermined direction,
the width of the inner crossing belt group (30A) is not less than 25% and not more than 70% of the width of the tread surface in the tread width direction (twd),
the width of the intermediate crossing belt group (30B) is not less than 55% and not more than 90% of the width of the tread surface in the tread width direction (twd),
the width of the outer crossing belt group (30C) is not less than 60% and not more than 110% of the width of the tread surface in the tread width direction (twd),
an inclination angle of the belt cord of the inner crossing belt group (30A) with respect to the carcass cord is not less than 70 degrees and not more than 85 degrees in a tread surface view,
the inclination angle of the belt cord of the intermediate crossing belt group (30B) with respect to the carcass cord is not less than 50 degrees and not more than 75 degrees in the tread surface view, and
the inclination angle of the belt cord of the outer crossing belt group (30C) with respect to the carcass cord is not less than 70 degrees and not more than 85 degrees in the tread surface view.

7. The tire (1) according to any one of claims 1 to 6, further comprising:
A buttress portion (9) extending inward in a tire radial direction (trd) from a tread end portion (5e) that is an outer end of the tread portion (5) in a tread width direction (twd), and extending continuous to a side wall portion (7) that forms a side surface (101) of the tire (1);
a plurality of lateral groove portions (60) each extending from the groove portion (50B) to the buttress portion (9), and having an opening (60A) in the buttress portion (9);
a circumferential land portion (70C) opposed to the lateral groove portion (60) with the groove portion (50B) interposed by the circumferential land portion (70C) and the lateral groove portion (60), wherein
a recessed portion (300) is formed in the circumferential land portion (70C) and located in an extending direction of the lateral groove portion (60),
the recessed portion (300) is triangular in the tread plan view,
a length of the recessed portion (300) in a tread width direction (twd) gradually increases from one point of connecting points between the groove portion (50B) and the recessed portion (300) toward a vertex of the recessed portion (300), and gradually decreases from the vertex of the recessed portion (300) toward the other point of the connecting points between the groove portion (50B) and the recessed portion (300),
the center of the recessed portion (300) in the extending direction of the groove portion (50B) deviates from a lateral groove center line in the extending direction of the lateral groove portion (60), in a direction perpendicular to the extending direction of the lateral groove portion (60).

8. The tire (1) according to any one of claims 1 to 6, further comprising:
a buttress portion (9) extending inward in a tire radial direction (trd) from a tread end portion (5e) that is an outer end of the tread portion (5) in a tread width direction (twd), and extending continuous to a side wall portion (7) that forms a side surface (101) of the tire (1);
a plurality of lateral groove portions (60) each extending from the groove portion (50B) to the buttress portion (9), and having an opening (60A) in the buttress portion (9);
a plurality of land portions (70) defined by the plurality of lateral groove portions (60) and the groove portion (50B), wherein
each of the land portions (70) comprises
a tread surface (5a) to come into contact with a road surface,
the side surface (101) located outward of the land portion (70) in the tread width direction (twd),
a first lateral groove surface (103) defining a side wall of the lateral groove portion (60) on one side of the land portion (70) in a tire circumferential direction (tcd), and
a second lateral groove surface (104) defining a side wall of the lateral groove portion (60) on the other side of the land portion (70) in a tire circumferential direction (tcd),
the land portion (70) is provided with an air supply mechanism for air supply to the lateral groove portion (60),
the air supply mechanism is a tapered face (100R) crossing the tread surface (5a), the side surface (101), and the first lateral groove surface (103), at a corner portion (100A) formed by the tread surface (5a), the side surface (101), and the first lateral groove surface (103),
two land portions (70) opposed to each other with the lateral groove portion (60) interposed are disposed such that the first lateral groove surface (103) of one land portion (70) is opposed to the second lateral groove surface (104) of the other land portion (70), and
the second lateral groove surface (104) is not provided with the tapered face (100R).

9. The tire (1) according to any one of claims 1 to 6, further comprising:
a buttress portion (9) extending inward in a tire radial direction (trd) from a tread end portion (5e) that is an outer end of the tread portion (5) in a tread width direction (twd), and extending continuous to a side wall portion (7) that forms a side surface (101) of the tire (1).
a plurality of lateral groove portions (60) each extending from the groove portion (50B) to the buttress portion (9), and having an opening (60A) in the buttress portion (9), wherein
the lateral groove portion (60) extends to be inclined to the tread width direction (twd),
an inclined angle of the lateral groove portion (60) to the tread width direction (twd) is 15 degrees to 60 degrees, both inclusive.

## Patentansprüche

1. Reifen (1), umfassend:
einen Laufflächenabschnitt (5) mit einem Rillenabschnitt (50B), welcher so ausgebildet ist, dass er sich in der Reifenumfangsrichtung (tcd) erstreckt;
eine Mehrzahl von Vorsprungsabschnitten (500), welche auf einem Rillengrund (50B2) des Rillenabschnitts (50B) vorgesehen sind, wobei jeder Vorsprungsabschnitt (500) sich von einer den Rillenabschnitt (50B) bildenden Seitenwand zur anderen der einen Seitenwand (50B1) gegenüberliegenden Seitenwand (50B3) erstreckt, wobei die Vorsprungsabschnitte (500) in vorbestimmten Intervallen in dem Rillenabschnitt (50B) angeordnet sind, wobei
die Beziehung 0,75 ≤ P ≤ 10L erfüllt ist, wenn eine Länge des Vorsprungsabschnitts (500) entlang einer Rillenmittellinie (WL), welche den Mittelpunkt, in der Breitenrichtung, des Rillenabschnitts (50B) kreuzt, gleich L ist, und das vorbestimmte Intervall gleich P ist, in einer Sicht auf die Lauffläche des Reifens, ferner umfassend
eine Mehrzahl von Gürtelschichten (30), welche im Laufflächenabschnitt (5) angeordnet sind, und welche sich in einer Reifenumfangsrichtung (tcd) erstrecken;
ein Paar Wulstkerne (10); und
eine Karkassenschicht (20), welche sich über das Paar von Wulstkernen (10) erstreckt und eine Torusform aufweist, wobei
die Mehrzahl der Gürtelschichten (30) eine kürzeste Gürtelschicht (32) umfasst, dessen Länge in einer Laufflächenbreitenrichtung (twd) die kleinste ist, **dadurch gekennzeichnet, dass**
die Länge entlang der Laufflächenbreitenrichtung (twd) von einem Ende (30e) der kürzesten Gürtelschicht (32) in der Laufflächenbreitenrichtung (twd) bis zur Rillenmittellinie (WL) nicht größer als 200 mm ist, und
die Mehrzahl von Gürtelschichten (30) eine innere kreuzende Gürtelgruppe (30A) umfasst, welche einen Satz von zwei Gürtelschichten (31, 32) umfasst und außerhalb der Karkassenschicht (20) in einer Reifenradialrichtung (trd) angeordnet ist, wobei eine zwischenliegende kreuzende Gürtelgruppe (30B) einen anderen Satz von zwei Gürtelschichten (33, 34) umfasst und außerhalb der inneren kreuzenden Gürtelgruppe (30A) in der Reifenradialrichtung (trd) angeordnet ist, und eine äußere kreuzende Gürtelgruppe (30C) einen weiteren Satz von zwei Gürtelschichten (35, 36) umfasst und außerhalb der zwischenliegenden kreuzenden Gürtelgruppe (30B) in der Reifenradialrichtung (trd) angeordnet ist, und
die innere kreuzende Gürtelgruppe (30A) die kürzeste Gürtelschicht (32) umfasst.

2. Reifen (1) nach Anspruch 1, wobei der Winkel θf, welcher von der Erstreckungsrichtung der Vorsprungsabschnitte (500) und der Rillenmittellinie (WL) in einer Sicht auf der Lauffläche des Reifens (1) auf einer der Drehrichtung des Reifens (1) gegenüberliegenden Seite gebildet ist, nicht weniger als 10 Grad und nicht mehr als 60 Grad beträgt.

3. Reifen (1) nach Anspruch 1 oder 2, wobei die Beziehung 0,03D < Hf ≤ 0,4D erfüllt ist, wenn die Höhe der Vorsprungsabschnitte (500) vom Rillengrund (50B2) Hf ist, und die Tiefe einer Lauffläche des Rillenabschnitts (500) bis zum Rillengrund (50B2) D ist.

4. Reifen (1) nach einem der Ansprüche 1 bis 3, wobei die Beziehung DC/OD ≥ 0,015 erfüllt ist, wenn der Reifenaußendurchmesser OD ist und eine Gummidicke des Laufflächenabschnitts (500) in der Stellung der Reifenäquatorlinie DC ist.

5. Reifen (1) nach einem der Ansprüche 1 bis 4, wobei die Vorsprungsabschnitte (500) von der einen Seitenwand (50B1) zur anderen Seitenwand (50B3) ununterbrochen sind.

6. Reifen (1) nach einem der Ansprüche 1 bis 5,
wobei die Karkassenschicht (20) einen Karkassenkord aufweist, welche sich in einer vorbestimmten Richtung erstreckt,
die Gürtelschicht (30) einen Gürtelkord umfasst, welche sich geneigt im Verhältnis zur vorbestimmten Richtung erstreckt,
die Breite der inneren kreuzenden Gürtelgruppe (30A) nicht weniger als 25% und nicht mehr als 70% der Breite der Lauffläche in der Laufflächenbreitenrichtung (twd) beträgt,
die Breite der zwischenliegenden kreuzenden Gürtelgruppe (30B) nicht weniger als 55% und nicht mehr als 90% der Breite der Lauffläche in der Laufflächenbreitenrichtung (twd) beträgt,
die Breite der äußeren kreuzenden Gürtelgruppe (30C) nicht weniger als 60% und nicht mehr als 110% der Breite der Lauffläche in der Laufflächenbreitenrichtung (twd) beträgt,
der Neigungswinkel des Gürtelkordes der inneren kreuzenden Gürtelgruppe (30A) relativ zum Karkassenkord nicht weniger als 70 Grad und nicht mehr als 85 Grad, in der Sicht auf die Lauffläche, beträgt,
der Neigungswinkel des Gürtelkords der zwischenliegenden kreuzenden Gürtelgruppe (30B) relativ zum Karkassenkord nicht weniger als 50 Grad und nicht mehr als 75 Grad, in der Sicht auf die Lauffläche, beträgt, und
der Neigungswinkel des Gürtelkordes der äußeren kreuzenden Gürtelgruppe (30C) relativ zum Karkassenkord nicht weniger als 70 Grad und nicht mehr als 85 Grad, in der Sicht auf die Lauffläche, beträgt.

7. Reifen (1) nach einem der Ansprüche 1 bis 6, ferner umfassend:
einen Stützabschnitt (9), welcher sich einwärts in einer Reifenradialrichtung (trd) von einem Laufflächenendabschnitt (5e), der ein äußeres Ende des Laufflächenabschnitts (5) in der Laufflächenbreitenrichtung (twd) ist, und sich ununterbrochen bis zu einem Seitenwandabschnitt (7) erstreckt, welcher eine Seitenfläche (101) des Reifens (1) bildet;
eine Mehrzahl von seitlichen Rillenabschnitten (60), welche sich jeweils von einem Rillenabschnitt (50B) bis zum Stützabschnitt (9) erstrecken, und eine Öffnung (60A) im Stützabschnitt (9) aufweisen;
einen umfänglichen Stegabschnitt (70C), welcher dem seitlichen Rillenabschnitt (60) gegenübersteht, wobei der Rillenabschnitt (50B) zwischen dem umfänglichen Stegabschnitt (70C) und dem seitlichen Rillenabschnitt (60) gelegen ist, wobei
ein vertiefter Abschnitt (300) in dem umfänglichen Stegabschnitt (70C) gebildet und in einer Erstreckungsrichtung des seitlichen Rillenabschnitts (60) angeordnet ist,
wobei der vertiefte Abschnitt (300) eine dreieckige Form in der Draufsicht auf die Lauffläche hat,
die Länge des vertieften Abschnitts (300) in der Laufflächenbreitenrichtung (twd) allmählich von einem der Verbindungspunkte zwischen dem Rillenabschnitt (50B) und dem vertieften Abschnitt (300) zu einer Spitze des vertieften Abschnitts (300) zunimmt, und allmählich von der Spitze des vertieften Abschnitts (300) zum anderen der Verbindungspunkte zwischen dem Rillenabschnitt (50B) und dem vertieften Abschnitt (300) abnimmt,
wobei der Mittelpunkt des vertieften Abschnitts (300) in der Erstreckungsrichtung des Rillenabschnitts (50B) von einer seitlichen Rillenmittellinie in der Erstreckungsrichtung des seitlichen Rillenabschnitts (60) in einer zur Erstreckungsrichtung des seitlichen Rillenabschnitts (60) senkrechten Richtung abweicht.

8. Reifen (1) nach einem der Ansprüche 1 bis 6, ferner umfassend:
einen Stützabschnitt (9), welcher sich einwärts in einer Reifenradialrichtung (trd) von einem Laufflächenendabschnitt (5e) erstreckt, welcher ein Außenende des Laufflächenabschnitts (5) in einer Laufflächenbreitenrichtung (twd) ist, und welcher sich ununterbrochen bis zu einem Seitenwandabschnitt (7) erstreckt, welcher eine Seitenfläche (101) des Reifens (1) bildet;
eine Mehrzahl von seitlichen Rillenabschnitten (60), welche sich jeweils vom Rillenabschnitt (50B) zum Stützabschnitt (9) erstrecken, und eine Öffnung (60A) im Stützabschnitt (9) aufweisen;
eine Mehrzahl von Stegabschnitten (70), welche von der Mehrzahl der seitlichen Rillenabschnitte (60) und vom Rillenabschnitt (50B) definiert sind,
wobei
jeder Stegabschnitt (70) umfasst
eine Lauffläche (5a), welche mit einer Straßenoberfläche in Kontakt kommt,
wobei die Seitenfläche (101) außerhalb des Stegabschnitts (70) in der Laufflächenbreitenrichtung (twd) angeordnet ist,
wobei eine erste seitliche Rillenfläche (103) eine Seitenwand des seitlichen Rillenabschnitts (60) auf einer Seite des Stegabschnitts (70) in einer Reifenumfangsrichtung (tcd) definiert, und
eine zweite seitliche Rillenfläche (104) eine Seitenwand des seitlichen Rillenabschnitts (60) auf der anderen Seite des Stegabschnitts (70) in der Reifenumfangsrichtung (tcd) definiert,
der Stegabschnitt (70) mit einem Luftspeisesystem zum Speisen von Luft in den seitlichen Rillenabschnitt (60) versehen ist,
das Luftspeisesystem aus einer verjüngten Fläche (100R), welche die Lauffläche (5a), die Seitenfläche (101) und die erste seitliche Rillenfläche (103) kreuzt, in einem Eckenabschnitt (100A), welcher von der Lauffläche (5a), der Seitenfläche (101), und der ersten seitlichen Rillenfläche (103) gebildet ist,
zwei zueinander gegenüberliegende und den seitlichen Rillenabschnitt (60) dazwischen einschließenden Stegabschnitte (70), so angeordnet sind, dass die erste seitliche Rillenfläche (103) eines Stegabschnitts (70) der zweiten seitlichen Rillenfläche (104) des anderen Stegabschnitts (70) gegenüberliegt, und
die zweite seitliche Rillenfläche (104) nicht mit der verjüngten Fläche (100R) versehen ist.

9. Reifen (1) nach einem der Ansprüche 1 bis 6, ferner umfassend:
einen Stützabschnitt (9), welcher sich einwärts in einer Reifenradialrichtung (trd) von einem Laufflächenendabschnitt (5e), welcher ein Außenende des Laufflächenabschnitts (5) ist, in einer Laufflächenbreitenrichtung (twd) und ununterbrochen bis zu einem Seitenwandabschnitt (7) erstreckt, welcher eine Seitenfläche (101) des Reifens (1) bildet,
eine Mehrzahl von seitlichen Rillenabschnitten (60), welche sich jeweils vom Rillenabschnitt (50B) zum Stützabschnitt (9) erstrecken, und eine Öffnung (60A) im Stützabschnitt (9) aufweisen, wobei
der seitliche Rillenabschnitt (60) sich relativ zur Laufflächenbreitenrichtung (twd) geneigt erstreckt,
wobei der Neigungswinkel des seitlichen Rillenabschnitts (60) relativ zur Laufflächenbreitenrichtung (twd) zwischen inklusive 15 und 60 Grad liegt.

## Revendications

1. Bandage pneumatique (1), comprenant :
une partie de bande de roulement (5) avec une partie de rainure (50B) formée de sorte à s'étendre dans une direction circonférentielle du bandage pneumatique (tcd) ;
plusieurs parties de saillie (500) agencées sur un fond de rainure (50B2) de la partie de rainure (50B), chacune des parties de saillie (500) s'étendant d'une paroi latérale formant la partie de rainure (50B) vers l'autre paroi latérale (50B3) opposée à ladite une paroi latérale (50B1), les parties de saillie (500) étant agencées à des intervalles prédéterminés dans la partie de rainure (50B) ; dans lequel :
une relation de 0,75 L ≤ P ≤ 10L est satisfaite lorsqu'une longueur de la partie de saillie (500), le long d'une ligne médiane de la rainure (WL) passant à travers un centre dans la direction de la largeur de la partie de rainure (50B) correspond à L, l'intervalle prédéterminé correspondant à P, dans une vue de la surface de la bande de roulement du bandage pneumatique, comprenant en outre :
plusieurs couches de ceinture (30) agencées dans la partie de bande de roulement (5) et s'étendant dans une direction circonférentielle du bandage pneumatique (tcd) ;
une paire de tringles (10) ; et
une couche de carcasse (20) s'étendant à travers la paire de tringles (10) et ayant une forme toroïdale ; dans lequel :
les plusieurs couches de ceinture (30) incluent une couche de ceinture constituant la couche la plus courte (32), dont la longueur dans une direction de la largeur de la bande de roulement (twd) est la plus petite ; **caractérisé en ce que** :
une longueur le long de la direction de la largeur de la bande de roulement (twd), d'une extrémité (30e) de la couche de ceinture la plus courte (32), dans la direction de la largeur de la bande de roulement (twd), vers la ligne médiane de la rainure (WL)-) n'est pas supérieure à 200 mm ; et
les plusieurs couches de ceinture (30) comprenant une groupe de ceintures à croisement interne (30A) comprenant un ensemble de deux couches de ceinture (31, 32) et agencé à l'extérieur de la couche de carcasse (20), dans une direction radiale du bandage pneumatique (trd), un groupe de ceintures à croisement intermédiaire, (30B), comprenant un autre ensemble de deux couches de ceintures (33, 34) et agencé à l'extérieur du groupe de ceintures à croisement interne (30A), dans la direction radiale du bandage pneumatique (trd), et un groupe de ceintures à croisement externe (30C) comprenant encore un autre ensemble de deux couches de ceinture (35, 36) et agencé à l'extérieur du groupe de ceintures à croisement intermédiaire (30B), dans la direction radiale du bandage pneumatique (trd) ; et
le groupe de ceintures à croisement interne (30A) inclut la couche de ceinture la plus courte (32).

2. Bandage pneumatique (1) selon la revendication 1, dans lequel un angle θf, constituant un angle formé par une direction d'extension des parties de saillie (500) et la ligne médiane de la rainure (WL), dans la vue de la surface de la bande de roulement du bandage pneumatique (1), et constituant un angle formé sur un côté opposé à une direction de rotation du bandage pneumatique (1), n'est pas inférieur à 10 degrés et pas supérieur à 60 degrés.

3. Bandage pneumatique (1) selon les revendications 1 ou 2, dans lequel la relation de 0,03D < Hf ≤ 0,4D est satisfaite lorsqu'une hauteur des parties de saillie (500), du fond de rainure (50B2) correspond à Hf, une profondeur, d'une surface de la bande de roulement de la partie de rainure (500) vers le fond de rainure (50B2) correspondant à D.

4. Bandage pneumatique (1) selon l'une quelconque des revendications 1 à 3, dans lequel la relation de DC/OD ≥ 0,015 est satisfaite lorsqu'un diamètre extérieur du bandage pneumatique correspond à OD, une épaisseur de la gomme de la partie de bande de roulement (500), au niveau d'une position d'une ligne équatoriale du bandage pneumatique, correspondant à DC.

5. Bandage pneumatique (1) selon l'une quelconque des revendications 1 à 4, dans lequel les parties de saillie (500) s'étendent en continu d'une paroi latérale (50B1) vers l'autre paroi latérale (50B3).

6. Bandage pneumatique (1) selon l'une quelconque des revendications 1 à 5,
dans lequel la couche de carcasse (20) comporte un câblé de carcasse s'étendant dans une direction prédéterminée ;
la couche de ceinture (30) inclut un câblé de ceinture s'étendant tout en étant inclinée par rapport à la direction prédéterminée ;
la largeur du groupe de ceintures à croisement interne (30A) ne représente pas moins de 25% et pas plus de 70% de la largeur de la surface de la bande de roulement dans la direction de la largeur de la bande de roulement (twd) ;
la largeur du groupe de ceintures à croisement intermédiaire (30B) ne représente pas moins de 55% et pas plus de 90% de la largeur de la surface de la bande de roulement, dans la direction de la largeur de la bande de roulement (twd) ;
la largeur du groupe de ceintures à croisement externe (30C) ne représente pas moins de 60% et pas plus de 110% de la largeur de la surface de la bande de roulement, dans la direction de la largeur de la bande de roulement (twd) ;
un angle d'inclinaison du câblé de ceinture du groupe de ceintures à croisement interne (30A) par rapport au câblé de carcasse n'est pas inférieur à 70 degrés et pas supérieur à 85 degrés dans une vue de la surface de la bande de roulement ;
l'angle d'inclinaison du câblé de ceinture du groupe de ceintures à croisement intermédiaire (30B) par rapport au câblé de carcasse n'est pas inférieur à 50 degrés et pas supérieur à 75 degrés dans la vue de la surface de la bande de roulement ; et
l'angle d'inclinaison du câblé de ceinture du groupe de ceintures à croisement externe (30C) par rapport au câblé de carcasse n'est pas inférieur à 70 degrés et pas supérieur à 85 degrés dans la vue de la surface de la bande de roulement.

7. Bandage pneumatique (1) selon l'une quelconque des revendications 1 à 6, comprenant en outre :
une partie de contrefort (9) s'étendant dans une direction radiale du bandage pneumatique (trd), à partir d'une partie d'extrémité de la bande de roulement (5e), constituant une extrémité externe de la partie de bande de roulement (5), dans une direction de la largeur de la bande de roulement (twd), et s'étendant en continu vers une partie de paroi latérale (7) formant une surface latérale (101) du bandage pneumatique (1) ;
plusieurs parties de rainure latérale (60), s'étendant chacune de la partie de rainure (50B) vers la partie de contrefort (9), et comportant une ouverture (60A) dans la partie de contrefort (9) ;
une partie d'appui circonférentielle (70C) opposée à la partie de rainure latérale (60), la partie de rainure (50B) étant agencée entre la partie d'appui circonférentielle (70C) et la partie de rainure latérale (60); dans lequel :
une partie évidée (300) est formée dans la partie d'appui circonférentielle (70C) et agencée dans une direction d'extension de la partie de rainure latérale (60) ;
la partie évidée (300) est triangulaire dans la vue en plan de la bande de roulement ;
une longueur de la partie évidée (300), dans une direction de la largeur de la bande de roulement (twd), est accrue progressivement, d'un point de points de connexion entre la partie de rainure (50B) et la partie évidée (300), vers un sommet de la partie évidée (300), et est réduite progressivement du sommet de la partie évidée (300) vers l'autre point des points de connexion entre la partie de rainure (50B) et la partie évidée (300) ;
le centre de la partie évidée (300), dans la direction d'extension de la partie de rainure (50), dévie par rapport à une ligne médiane de la rainure latérale, dans la direction d'extension de la partie de rainure latérale (60), dans une direction perpendiculaire à la direction d'extension de la partie de rainure latérale (60).

8. Bandage pneumatique (1) selon l'une quelconque des revendications 1 à 6, comprenant en outre :
une partie de contrefort (9) s'étendant vers l'intérieur dans une direction radiale du bandage pneumatique (trd), à partir d'une partie d'extrémité de la bande de roulement (5e) constituant une extrémité externe de la partie de bande de roulement (5), dans la direction de la largeur de la bande de roulement (twd), et s'étendant en continu vers une partie de paroi latérale (7) formant une surface latérale (101) du bandage pneumatique (1) ;
plusieurs parties de rainure latérale (60), s'étendant chacune de la partie de rainure (50B) vers la partie de contrefort (9), et comportant une ouverture (60A) dans la partie de contrefort (9) ;
plusieurs parties d'appui (70) définies par les plusieurs parties de rainure latérale (60) et la partie de rainure (50B), dans lequel :
chacune des parties d'appui (70) comprend :
une surface de bande de roulement (5a) destinée à entrer en contact avec la surface d'une route ;
la surface latérale (101) agencée vers l'extérieur de la partie d'appui (70) dans la direction de la largeur de la bande de roulement (twd) ;
une première surface de rainure latérale (103) définissant une paroi latérale de la partie de rainure latérale (60) sur un côté de la partie d'appui (70), dans une direction circonférentielle du bandage pneumatique (tcd) ; et
une deuxième surface de rainure latérale (104) définissant une paroi latérale de la partie de rainure latérale (60) sur l'autre côté de la partie d'appui (70), dans une direction circonférentielle du bandage pneumatique (tcd) ;
la partie d'appui (70) comporte un mécanisme d'alimentation d'air pour assurer l'alimentation en air de la partie de rainure latérale (60) ;
le mécanisme d'alimentation d'air est constitué par une face effilée (100R) croisant la surface de la bande de roulement (5a), la surface latérale (101) et la première surface de rainure latérale (103), au niveau d'une partie de coin (100A) formée par la surface de bande de roulement (5a), la surface latérale (101) et la première surface de rainure latérale (103) ;
deux parties d'appui (70) opposées l'une à l'autre, la partie de rainure latérale (60) étant agencée entre elles, de sorte que la première surface de rainure latérale (103) d'une partie d'appui (70) est opposée à la deuxième surface de rainure latérale (104) de l'autre partie d'appui (70) ; et
la deuxième surface de rainure latérale (104) ne comporte pas la face effilée (100R).

9. Bandage pneumatique (1) selon l'une quelconque des revendications 1 à 6, comprenant en outre :
une partie de contrefort (9) s'étendant vers l'intérieur dans une direction radiale du bandage pneumatique (trd), à partir d'une partie d'extrémité de la bande de roulement (5e), constituant une extrémité externe de la partie de bande de roulement (5), dans une direction de la largeur de la bande de roulement (twd), et s'étendant en continu vers une partie de paroi latérale (7) formant une surface latérale (101) du bandage pneumatique (1);
plusieurs parties de rainure latérale (60), s'étendant chacune de la partie de rainure (50B) vers la partie de contrefort (9), et comportant une ouverture (60A) dans la partie de contrefort (9), dans lequel :
la partie de rainure latérale (60) s'étend de sorte à être inclinée vers la direction de la largeur de la bande de roulement (twd) ;
un angle incliné de la partie de rainure latérale (60) par rapport à la direction de la largeur de la bande de roulement (twd) est compris entre 15 degrés et 60 degrés, les deux valeurs étant incluses.
